# EUROPEAN PATENT APPLICATION

(11) **EP 4 485 889 A1**
(43) Date of publication of application: **01.01.2025**
(21) Application number: 23777789.1
(22) Date of filing: 09.03.2023
(51) Int. Cl.: H04L 45/24, H04W 36/00

(54) **COMMUNICATION METHOD AND APPARATUS**

(30) Priority: 29.03.2022 CN 202210318790
(71) Applicant: Huawei Technologies Co., Ltd., Shenzhen, Guangdong 518129 (CN)
(72) Inventor: HUANG, Kang, Shenzhen, Guangdong 518129 (CN); XU, Yishan, Shenzhen, Guangdong 518129 (CN)
(74) Representative: Goddar, Heinz J.
(86) International application number: PCT/CN2023/080460
(87) International publication number: WO 2023/185411

(57) **Abstract**

This application provides a communication method and apparatus, to provide a non-3GPP path switching solution in a multi-access session. The method includes: A session management device determines to perform non-3GPP transmission path switching in a multi-access session, where the multi-access session includes at least two non-3GPP transmission paths; and the session management device sends a first offloading rule to a user plane device and/or sends a second offloading rule to a terminal device, where the first offloading rule is for supporting the user plane device in determining a first target transmission path from at least two 3GPP transmission paths, and the second offloading rule is for supporting the terminal device in determining a second target transmission path from the at least two non-3GPP transmission paths. According to the method, when it is determined to perform non-3GPP path switching, UE and a UPF can select, in a switching process based on a new offloading rule, an appropriate path from a plurality of non-3GPP access paths for data transmission, to ensure service continuity during session switching.

## Description

### CROSS-REFERENCE TO RELATED APPLICATIONS

This application claims priority to Chinese Patent Application No. 202210318790.2, filed with the China National Intellectual Property Administration on March 29, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication transmission process, service flow data to be sent is usually transmitted by establishing a multi-access session (multi-access PDU Session, MA PDU Session) over a 3rd generation partnership project (3rd Generation Partnership Project, 3GPP) access network (path) and a non-3GPP access network (path), to improve transmission efficiency.

However, an existing multi-access session technology supports transmission only over one 3GPP access network (path) and one non-3GPP access network (path), and does not support transmission over more than two access networks (paths). For example, when transmission is performed over at least two non-3GPP access networks (paths) in a multi-access session scenario, a plurality of non-3GPP paths coexist for implementing non-3GPP path switching. Consequently, a terminal device (user equipment, UE) and a user plane device (user plane function, UPF) cannot effectively offload service data during switching, and services may be interrupted, affecting user experience.

Currently, there is no method for supporting non-3GPP path switching in the multi-access session scenario.

### SUMMARY

This application provides a communication method and apparatus, to provide a non-3GPP path switching solution in a multi-access session, better support offloading of service flow data, ensure communication continuity, and reduce system overheads.

According to a first aspect, a communication method is provided. The method may be performed by a session management device, or may be performed by a chip having a function similar to that of a session management device. In the method, the session management device determines to perform non-3GPP transmission path switching in a multi-access session, where the multi-access session includes at least two non-3GPP transmission paths; and the session management device sends a first offloading rule to a user plane device and/or sends a second offloading rule to a terminal device, where the first offloading rule is for supporting the user plane device in determining a first target transmission path from the at least two non-3GPP transmission paths, and the second offloading rule is for supporting the terminal device in determining a second target transmission path from the at least two non-3GPP transmission paths.

In this embodiment, the first target transmission path may be one or more of a plurality of non-3GPP transmission paths.

In addition, when none of the non-3GPP transmission paths is available, the first target transmission path in this embodiment of this application may alternatively not include the non-3GPP transmission path.

The second target transmission path may be one or more of a plurality of non-3GPP transmission paths. In addition, when none of the non-3GPP transmission paths is available, the second target transmission path in this embodiment of this application may alternatively not include the non-3GPP transmission path.

In this embodiment of this application, the first offloading rule is for supporting the user plane device in determining the first target transmission path from the at least two non-3GPP transmission paths, which may mean that when performing the non-3GPP transmission path, the user plane device may determine a transmission path by using the first offloading rule. Similarly, the second offloading rule is for supporting the terminal device in determining the second target transmission path from the at least two non-3GPP transmission paths, which may mean that when performing the non-3GPP transmission path, the user plane device may determine a transmission path by using the second offloading rule.

In this embodiment, a multi-access session management procedure may be a multi-access session establishment procedure, a multi-access session modification procedure, a multi-access session addition procedure, a multi-access session release procedure, a multi-access session activation procedure, or the like.

Based on the foregoing solution, in a multi-path session switching procedure, when it is determined that non-3GPP transmission path switching is to be performed, the terminal device and the user plane device trigger, in a switching process, an offloading rule supporting the plurality of non-3GPP transmission paths. For example, the triggered offloading rule may support the UE and/or the UPF in selecting an appropriate transmission path from the plurality of non-3GPP transmission paths for data transmission, so that service data is effectively offloaded, to ensure service continuity during session switching.

In a possible case, the session management device determines, based on a received session request message, to perform non-3GPP transmission path switching in the multi-access session, where the session request message includes switching indication information, and the switching indication information indicates that non-3GPP transmission path switching is to be performed and/or indicates that an established target transmission path is a non-3GPP transmission path; and the session request message is a first session request message sent by the terminal device after the terminal device determines to perform the non-3GPP transmission path; or the session request message is a second session request message sent by a mobility management device after the mobility management device determines to perform the non-3GPP transmission path.

In this embodiment, the first session request message may be a session establishment request message, or the first session request message may be a session modification request message, or the like. This is not limited herein.

The second session request message may be a session create context message, or the second session request message may be a session update session context message, or the like. This is not limited herein.

Based on the foregoing solution, an embodiment of this application provides a manner in which the session management device determines whether to perform non-3GPP transmission path switching. For example, the session management device may determine, based on the received session request message, whether to perform non-3GPP transmission path switching.

In a possible case, when the switching indication information indicates that the established target transmission path is the non-3GPP transmission path, and when the session management device determines that an established source transmission path of the multi-access session is the non-3GPP transmission path, the session management device determines, based on the session request, to perform non-3GPP path switching.

In a possible case, the session request message further includes a session identifier of the multi-access session, and the session identifier is for determining the multi-access session of the terminal device.

In a possible case, the session request message further includes a session context identifier of the multi-access session, and the session context identifier is for determining the multi-access session of the terminal device.

In a possible case, the first offloading rule includes:
an offloading rule used by the user plane device before the non-3GPP path switching, and access priority indication information, where the access priority indication information indicates the first target transmission path.

The second offloading rule includes:
an offloading rule used by the terminal device before the non-3GPP path switching, and access priority indication information, where the access priority indication information indicates the second target transmission path.

In this embodiment, the access priority information may be a radio access technology (radio access technology, RAT) type (type). If the RAT type is trusted non-3GPP access (trusted non-3GPP access), it indicates that the non-3GPP transmission path of the user plane device is a trusted non-3GPP path. If the RAT type is untrusted non-3GPP access (untrusted non-3GPP access), it indicates that the non-3GPP transmission path of the user plane device is an untrusted non-3GPP path. If the RAT type is 3GPP access (3GPP access), it indicates that all non-3GPP transmission paths of the user plane device are migrated to 3GPP transmission paths.

In a possible case, the first target transmission path is a trusted non-3GPP transmission path or an untrusted non-3GPP transmission path; and
the second target transmission path is a trusted non-3GPP transmission path or an untrusted non-3GPP transmission path.

In a possible case, when non-3GPP transmission path switching is performed, a source non-3GPP transmission path before the switching may be an untrusted non-3GPP transmission path, and a target non-3GPP transmission path after the switching may be a trusted non-3GPP transmission path; or
when non-3GPP transmission path switching is performed, a source non-3GPP transmission path before the switching may be a trusted non-3GPP transmission path, and a target non-3GPP transmission path after the switching may be an untrusted non-3GPP transmission path.

In a possible case, the first offloading rule includes a third offloading rule, where the third offloading rule indicates the user plane device to perform redundant transmission over the at least two non-3GPP transmission paths.

In a possible case, the second offloading rule includes a fourth offloading rule, where the fourth offloading rule indicates the terminal device to perform redundant transmission over the at least two non-3GPP transmission paths.

In a possible case, the first offloading rule includes: an offloading rule used by the user plane device before the non-3GPP path switching, a third offloading rule, and a rule application condition, where the third offloading rule indicates the user plane device to perform redundant transmission over the at least two non-3GPP transmission paths, and the rule application condition indicates to apply the offloading rule when path switching is performed.

In a possible case, the second offloading rule includes: an offloading rule used by the terminal device before the non-3GPP path switching, a fourth offloading rule, and a rule application condition, where the fourth offloading rule indicates the terminal device to perform redundant transmission over the at least two non-3GPP transmission paths, and the rule application condition indicates to apply the offloading rule when path switching is performed.

According to a second aspect, a communication method is provided. The method may be performed by a terminal device, or may be performed by a chip having a function similar to that of a terminal device. In the method, the terminal device determines to perform non-3GPP transmission path switching in a multi-access session, where the multi-access session includes at least two non-3GPP transmission paths; the terminal device sends a first session request message to a session management device, where the first session request message includes switching indication information, and the switching indication information indicates that non-3GPP transmission path switching is to be performed and/or indicates that an established target transmission path is a non-3GPP transmission path; the terminal device receives a second offloading rule sent by the session management device, where the second offloading rule is for supporting the terminal device in determining a second target transmission path from the at least two non-3GPP transmission paths; and the terminal device determines a transmission path based on the second offloading rule.

In this embodiment, the second target transmission path may be one or more of a plurality of non-3GPP transmission paths. In addition, when none of the non-3GPP transmission paths is available, the second target transmission path in this embodiment of this application may alternatively not include the non-3GPP transmission path.

The second offloading rule is for supporting the terminal device in determining the second target transmission path from the at least two non-3GPP transmission paths, which may mean that when performing the non-3GPP transmission path, the user plane device may determine a transmission path by using the second offloading rule.

In this embodiment, a multi-access session management procedure may be a multi-access session establishment procedure, a multi-access session modification procedure, a multi-access session addition procedure, a multi-access session release procedure, a multi-access session activation procedure, or the like.

Based on the foregoing solution, in a multi-path session switching procedure, when it is determined that non-3GPP transmission path switching is to be performed, the terminal device and the user plane device trigger, in a switching process, an offloading rule supporting the plurality of non-3GPP transmission paths. For example, the triggered offloading rule may support the UE and/or the UPF in selecting an appropriate transmission path from the plurality of non-3GPP transmission paths for data transmission, so that service data is effectively offloaded, to ensure service continuity during session switching.

In a possible implementation, the first session request message further includes a multi-access session identifier, and the multi-access session identifier is for determining the multi-access session of the terminal device.

In a possible implementation, the second offloading rule includes an offloading rule used by the terminal device before the non-3GPP path switching, and access priority indication information, where the access priority indication information indicates the second target transmission path.

In a possible implementation, the second target transmission path is a trusted non-3GPP transmission path or an untrusted non-3GPP transmission path.

In a possible implementation, the second offloading rule includes a fourth offloading rule, where the fourth offloading rule indicates the terminal device to perform redundant transmission over the at least two non-3GPP transmission paths.

In a possible implementation, the second offloading rule includes: an offloading rule used by the terminal device before the non-3GPP path switching, a fourth offloading rule, and a rule application condition, where the fourth offloading rule indicates the terminal device to perform redundant transmission over the at least two non-3GPP transmission paths, and the rule application condition indicates to apply the offloading rule when path switching is performed.

According to a third aspect, a communication method is provided. The method may be performed by a user plane device, or may be performed by a chip having a function similar to that of a user plane device. In the method, when non-3GPP transmission path switching is performed in a multi-access session, the user plane device receives a first offloading rule sent by a session management device, where the first offloading rule is for supporting the user plane device in determining a first target transmission path from at least two non-3GPP transmission paths, and the multi-access session includes the at least two non-3GPP transmission paths; and the user plane device determines a transmission path based on the first offloading rule.

In this embodiment, the first target transmission path may be one or more of a plurality of non-3GPP transmission paths.

In addition, when none of the non-3GPP transmission paths is available, the first target transmission path in this embodiment of this application may alternatively not include the non-3GPP transmission path.

A second target transmission path may be one or more of a plurality of non-3GPP transmission paths. In addition, when none of the non-3GPP transmission paths is available, the second target transmission path in this embodiment of this application may alternatively not include the non-3GPP transmission path.

In this embodiment of this application, the first offloading rule is for supporting the user plane device in determining the first target transmission path from the at least two non-3GPP transmission paths, which may mean that when performing the non-3GPP transmission path, the user plane device may determine a transmission path by using the first offloading rule.

In this embodiment, a multi-access session management procedure may be a multi-access session establishment procedure, a multi-access session modification procedure, a multi-access session addition procedure, a multi-access session release procedure, a multi-access session activation procedure, or the like.

Based on the foregoing solution, in a multi-path session switching procedure, when it is determined that non-3GPP transmission path switching is to be performed, the terminal device and the user plane device trigger, in a switching process, an offloading rule supporting the plurality of non-3GPP transmission paths. For example, the triggered offloading rule may support the UE and/or the UPF in selecting an appropriate transmission path from the plurality of non-3GPP transmission paths for data transmission, so that service data is effectively offloaded, to ensure service continuity during session switching.

In a possible implementation, the first offloading rule includes:
an offloading rule used by the user plane device before the non-3GPP path switching, and access priority indication information, where the access priority indication information indicates the first target transmission path.

In a possible implementation, the first target transmission path is a trusted non-3GPP transmission path or an untrusted non-3GPP transmission path.

In a possible implementation, the first offloading rule includes:
a third offloading rule, where the third offloading rule indicates the user plane device to perform redundant transmission over the at least two non-3GPP transmission paths.

In a possible implementation, the first offloading rule includes:
an offloading rule used by the user plane device before the non-3GPP path switching, a third offloading rule, and a rule application condition, where the third offloading rule indicates the user plane device to perform redundant transmission over the at least two non-3GPP transmission paths, and the rule application condition indicates to apply the offloading rule when path switching is performed.

According to a fourth aspect, a communication method is provided. The method may be performed by a mobility management device, or may be performed by a chip having a function similar to that of a mobility management device. In the method, the mobility management device determines to perform non-3GPP transmission path switching in a multi-access session, where the multi-access session includes at least two non-3GPP transmission paths; the mobility management device sends a second request message to a session management device, where the second request message includes switching indication information, and the switching indication information indicates that non-3GPP transmission path switching is to be performed and/or indicates that an established target transmission path is a non-3GPP transmission path; the mobility management device receives a second offloading rule sent by the session management device, where the second offloading rule is for supporting a terminal device in determining a second target transmission path from the at least two non-3GPP transmission paths; and the mobility management device sends the second offloading rule to the terminal device.

In this embodiment, the second target transmission path may be one or more of a plurality of non-3GPP transmission paths. In addition, when none of the non-3GPP transmission paths is available, the second target transmission path in this embodiment of this application may alternatively not include the non-3GPP transmission path.

The second offloading rule is for supporting the terminal device in determining the second target transmission path from the at least two non-3GPP transmission paths, which may mean that when performing the non-3GPP transmission path, a user plane device may determine a transmission path by using the second offloading rule.

In this embodiment, a multi-access session management procedure may be a multi-access session establishment procedure, a multi-access session modification procedure, a multi-access session addition procedure, a multi-access session release procedure, a multi-access session activation procedure, or the like.

Based on the foregoing solution, in a multi-path session switching procedure, when it is determined that non-3GPP transmission path switching is to be performed, the terminal device and the user plane device trigger, in a switching process, an offloading rule supporting the plurality of non-3GPP transmission paths. For example, the triggered offloading rule may support the UE and/or the UPF in selecting an appropriate transmission path from the plurality of non-3GPP transmission paths for data transmission, so that service data is effectively offloaded, to ensure service continuity during session switching.

In a possible implementation, the second request message further includes a multi-access session identifier, and the multi-access session identifier is for determining the multi-access session of the terminal device.

In a possible implementation, the second request message further includes a context identifier of the multi-access session, and the context identifier of the multi-access session is for determining the multi-access session of the terminal device.

In a possible implementation, the second offloading rule includes an offloading rule used by the terminal device before the non-3GPP path switching, and access priority indication information, where the access priority indication information indicates the second target transmission path.

In a possible implementation, the second target transmission path is a trusted non-3GPP transmission path or an untrusted non-3GPP transmission path.

In a possible implementation, the second offloading rule includes:
a fourth offloading rule, where the fourth offloading rule indicates the terminal device to perform redundant transmission over the at least two non-3GPP transmission paths.

In a possible implementation, the second offloading rule includes:
an offloading rule used by the terminal device before the non-3GPP path switching, a fourth offloading rule, and a rule application condition, where the fourth offloading rule indicates the terminal device to perform redundant transmission over the at least two non-3GPP transmission paths, and the rule application condition indicates to apply the offloading rule when path switching is performed.

In a possible implementation, the mobility management device determines, based on a received non-access stratum message sent by the terminal device for requesting path switching, to perform non-3GPP transmission path switching, where the non-access stratum message includes the switching indication information, and the switching indication information indicates that the non-3GPP transmission path switching is to be performed and/or indicates that the established target transmission path is the non-3GPP transmission path.

In a possible implementation, the method further includes:

The mobility management device determines, in a process of performing non-3GPP path switching, that a first condition for releasing a signaling connection is met; and the mobility management device releases a signaling connection of the terminal device on a target non-3GPP transmission path or a source non-3GPP transmission path.

In this embodiment, releasing the signaling connection may be releasing access network signaling, or may be terminal device deregistration, or the like. This is not limited herein.

Based on the foregoing method, the mobility management device determines, by determining whether the terminal device is used for subsequent session switching during registration, whether to release the signaling connection of the terminal device on the target path or the source path. This effectively avoids a case in which the terminal device maintains a dual-registration state on the trusted non-3GPP path and the untrusted non-3GPP path for a long time. In addition, MA PDU session switching on the non-3GPP path may also be supported.

In a possible implementation, the first condition for releasing a signaling connection includes:

A first timer started by the mobility management device after the terminal device completes the registration of the target non-3GPP transmission path expires, where the first timer is configured to indicate to trigger release of a signaling connection of the source non-3GPP transmission path; or a second timer started by the mobility management device after the terminal device completes the registration of the target non-3GPP transmission path expires, and the terminal device does not complete switching of the target non-3GPP transmission path, where the second timer is configured to indicate to trigger release of a signaling connection of the target non-3GPP transmission path.

In a possible implementation, the method further includes:

The mobility management device sends a third request message to the session management device after determining that the terminal device completes the non-3GPP transmission path switching, where the third request message indicates to apply an offloading rule used by the terminal device and/or the user plane device before the non-3GPP transmission path switching.

According to a fifth aspect, a communication method is provided. The method may be performed by a mobility management device, or may be performed by a chip having a function similar to that of a mobility management device. In the method, the mobility management device determines, in a process of performing non-3 GPP path switching, that a first condition for releasing a signaling connection is met; and the mobility management device releases a signaling connection of a terminal device on a target non-3GPP transmission path or a source non-3GPP transmission path.

In this embodiment, releasing the signaling connection may be releasing access network signaling, or may be terminal device deregistration, or the like. This is not limited herein.

Based on the foregoing method, the mobility management device determines, by determining whether the terminal device is used for subsequent session switching during registration, whether to release the signaling connection of the terminal device on the target path or the source path. This effectively avoids a case in which the terminal device maintains a dual-registration state on a trusted non-3GPP path and an untrusted non-3GPP path for a long time. In addition, MA PDU session switching on the non-3GPP path may also be supported.

In a possible implementation, the first condition for releasing a signaling connection includes:

A first timer started by the mobility management device after the terminal device completes the registration of the target non-3GPP transmission path expires, where the first timer is configured to indicate to trigger release of a signaling connection of the source non-3GPP transmission path; or a second timer started by the mobility management device after the terminal device completes the registration of the target non-3GPP transmission path expires, and the terminal device does not complete switching of the target non-3GPP transmission path, where the second timer is configured to indicate to trigger release of a signaling connection of the target non-3GPP transmission path.

According to a sixth aspect, an embodiment of this application provides a communication apparatus. The apparatus may be a session management device, or may be a chip used in a session management device. The apparatus has a function of implementing any implementation method of the first aspect. The function may be implemented by hardware, or may be implemented by hardware executing corresponding software. The hardware or the software includes one or more modules corresponding to the function.

According to a seventh aspect, an embodiment of this application provides a communication apparatus. The apparatus may be a terminal device, or may be a chip or a module used in a terminal device. The terminal device may be, for example, a smart mobile terminal, a smart home device, a smart car, or a smart wearable device.

The smart mobile terminal is, for example, a mobile phone, a tablet computer, a notebook computer, an ultra-mobile personal computer (ultra-mobile personal computer, UMPC), a netbook, or a personal digital assistant (personal digital assistant, PDA). The smart home device is, for example, a smart refrigerator, a smart washing machine, a smart TV, or a speaker. An intelligent automobile wearable device is, for example, a smart headset, smart glasses, smart clothing, or smart shoes. The apparatus has a function of implementing any implementation method of the second aspect. The function may be implemented by hardware, or may be implemented by hardware executing corresponding software. The hardware or the software includes one or more modules corresponding to the function.

According to an eighth aspect, an embodiment of this application provides a communication apparatus. The apparatus may be a UPF, or may be a chip or a module used in a UPF. The apparatus has a function of implementing any implementation method of the third aspect. The function may be implemented by hardware, or may be implemented by hardware executing corresponding software. The hardware or the software includes one or more modules corresponding to the function.

According to a ninth aspect, an embodiment of this application provides a communication apparatus. The apparatus may be a mobility management device, or may be a chip or a module used in a mobility management device. The apparatus has a function of implementing any implementation method of the fourth aspect. The function may be implemented by hardware, or may be implemented by hardware executing corresponding software. The hardware or the software includes one or more modules corresponding to the function.

According to a tenth aspect, an embodiment of this application provides a communication apparatus. The apparatus may be a mobility management device, or may be a chip or a module used in a mobility management device. The apparatus has a function of implementing any implementation method of the fifth aspect. The function may be implemented by hardware, or may be implemented by hardware executing corresponding software. The hardware or the software includes one or more modules corresponding to the function.

According to an eleventh aspect, an embodiment of this application provides a communication apparatus, including a processor and a memory. The memory is configured to store computer instructions. When the apparatus runs, the processor executes the computer instructions stored in the memory, to enable the apparatus to perform any implementation method in the first aspect to the fifth aspect.

According to a twelfth aspect, an embodiment of this application provides a communication apparatus, including units or means (means) for performing steps of any implementation method in the first aspect to the fifth aspect.

According to a thirteenth aspect, an embodiment of this application provides a communication apparatus, including a processor and an interface circuit. The processor is configured to: communicate with another apparatus through the interface circuit, and perform any implementation method in the first aspect to the fifth aspect. There are one or more processors.

According to a fourteenth aspect, an embodiment of this application provides a communication apparatus, including a processor coupled to a memory. The processor is configured to invoke a program stored in the memory, to perform any implementation method in the first aspect to the fifth aspect. The memory may be located inside or outside the apparatus. In addition, there may be one or more processors.

According to a fifteenth aspect, an embodiment of this application further provides a computer-readable storage medium. The computer-readable storage medium stores instructions. When the instructions are run on a communication apparatus, any implementation method in the first aspect to the fifth aspect is performed.

According to a sixteenth aspect, an embodiment of this application further provides a computer program product. The computer program product includes a computer program or instructions. When the computer program or the instructions are run by a communication apparatus, any implementation method in the first aspect to the fifth aspect is performed.

According to a seventeenth aspect, an embodiment of this application further provides a chip system, including a processor, configured to perform any implementation method in the first aspect to the fifth aspect.

According to an eighteenth aspect, an embodiment of this application further provides a communication system, including the communication apparatus in the sixth aspect to the communication apparatus in the ninth aspect. Optionally, the communication system further includes the communication apparatus in the tenth aspect.

For technical effects that can be achieved by various design solutions in the sixth aspect to the eighteenth aspect, refer to descriptions of technical effects of corresponding solutions in the first aspect to the fifth aspect. Details are not described herein again.

### BRIEF DESCRIPTION OF DRAWINGS

FIG. 1 is a diagram of a multi-access session system according to a conventional technology;
FIG. 2 is a diagram of a first multi-access session scenario according to an embodiment of this application;
FIG. 3 is a diagram of a second multi-access session scenario according to an embodiment of this application;
FIG. 4 is a diagram of a third multi-access session scenario according to an embodiment of this application;
FIG. 5 is a diagram of a fourth multi-access session scenario according to an embodiment of this application;
FIG. 6 is a diagram of a communication path switching system according to an embodiment of this application;
FIG. 7 is a schematic flowchart of a communication path switching method according to an embodiment of this application;
FIG. 8A to FIG. 8C are a schematic flowchart of a first case of path switching according to an embodiment of this application;
FIG. 9 is a schematic flowchart of a second case of path switching according to an embodiment of this application;
FIG. 10 is a schematic flowchart of a third case of path switching according to an embodiment of this application;
FIG. 11 is a diagram of a first communication path switching apparatus according to an embodiment of this application; and
FIG. 12 is a diagram of a second communication path switching apparatus according to an embodiment of this application.

### DESCRIPTION OF EMBODIMENTS

For ease of understanding of the technical solutions provided in embodiments of this application, the following describes technical terms used in this application.
(1) Types of non-3GPP access: The types of non-3GPP access include an untrusted non-3GPP access (untrusted non-3GPP access) technology, for example, accessing a core network via a personal wireless access point, a trusted non-3GPP access (trusted non-3GPP access) technology, for example, accessing a core network via a carrier-deployed wireless access point, and a wireline access (wireline access) technology.

The non-3GPP access technology may include a wireless communication technology (Wi-Fi), Bluetooth, ZigBee (ZigBee), or the like. A non-3GPP access network device may include a non-3GPP interworking function (non-3GPP interworking function, N3IWF), a trusted non-3GPP gateway function (trusted non-3GPP gateway function, TNGF), a trusted non-3GPP access point (trusted non-3GPP access point, TNAP), a trusted wireless local area network interworking function (trusted wireless local area network interworking function, TWIF), and a wireline access gateway function (wireline access gateway function, W-AGF). The W-AGF may also be referred to as an AGF. If the access technology is an untrusted non-3GPP access technology, a non-3GPP access network device corresponding to the untrusted non-3GPP access technology may include an N3IWF. A network topology structure of the N3IWF is equivalent to a radio access network (radio access network, RAN) in a 3GPP access network, and an N2 interface and an N3 interface may be supported. If the access technology is a trusted non-3GPP access technology, a non-3GPP access network device corresponding to the trusted non-3GPP access technology may include a TNGF. A network topology structure of the TNGF is equivalent to a RAN in a 3GPP access network, and an N2 interface and an N3 interface can be supported.

In an example, an untrusted non-3GPP access point may be an access point deployed by a non-carrier, for example, a Wi-Fi access point (access point, AP) deployed at home or by a merchant. The trusted non-3GPP access point may be an access point deployed by a carrier, and may be referred to as a trusted non-3GPP access point (trusted N3GPP Access Point, TNAP).

(2) Multi-access session (multi-access PDU Session, MA PDU Session): The multi-access session is used by UE and/or a UPF for transmission over a 3GPP access network (which may also be understood as a 3GPP access path) and a non-3GPP access network (which may also be understood as a non-3GPP access path), to improve transmission efficiency.

For example, a user plane channel may include two access network devices (a 3GPP access network device and a non-3GPP access network device), and the two access network devices are connected to a same UPF (or are connected to a same UPF via another UPF). For example, the UE may send uplink data to the UPF via a RAN and/or an N3IWF; and the UPF sends downlink data to the UE via the RAN and/or the N3IWF.

(3) Offloading rule: The offloading rule indicates how to send to-be-sent data over a 3GPP access network path and/or a non-3GPP access network path.

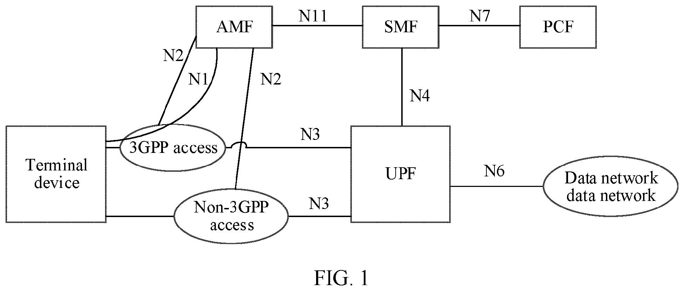

Currently, in a communication transmission process, service flow data to be sent is usually transmitted by establishing a multi-access session (multi-access PDU Session, MA PDU Session) over a 3GPP access network (path) and a non-3GPP access network (path), to improve transmission efficiency. For example, as shown in FIG. 1, a user plane channel may include two access network devices (a 3GPP access network device and a non-3GPP access network device). The two access network devices are connected to a same UPF (or are connected to a same UPF via another UPF). UE may send uplink data to a UPF via a radio access network (Radio Access Network, RAN) and/or a non-3GPP interworking function (non-3GPP interworking function, N3IWF); and the UPF sends downlink data to the UE via the RAN and/or the N3IWF.

However, an existing multi-access session technology supports transmission only over one 3GPP access network (path) and one non-3GPP access network (path), and does not support transmission over more than two paths. To be specific, when transmission is performed over more than two paths in a multi-access session scenario, the UE and the UPF cannot effectively offload service data, and services may be interrupted, affecting user experience.

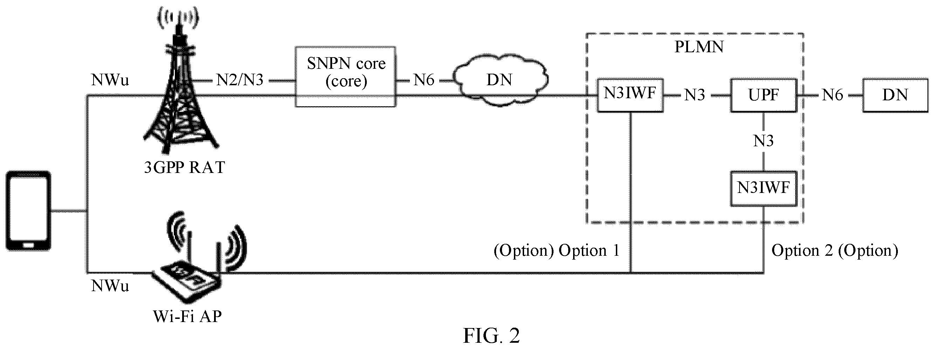

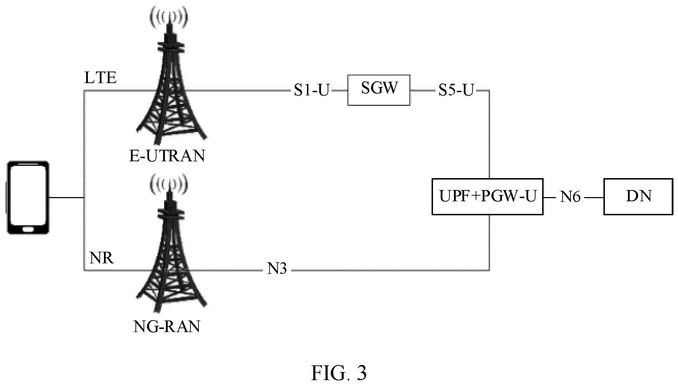

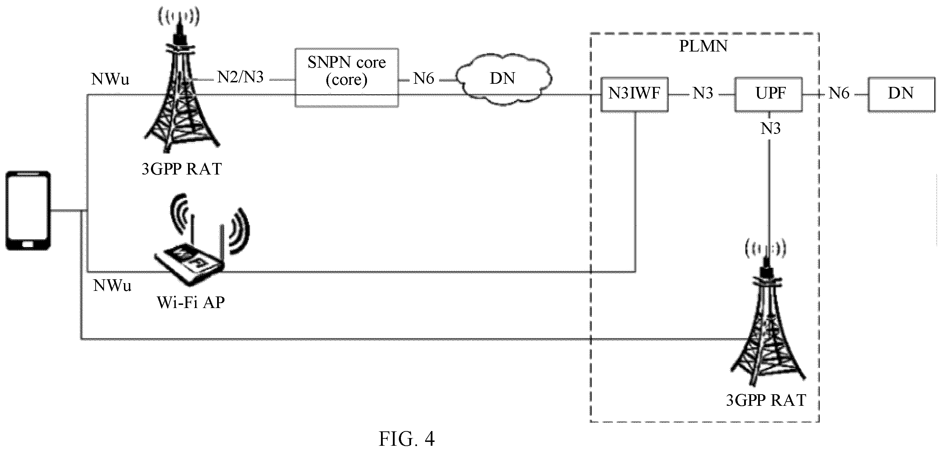

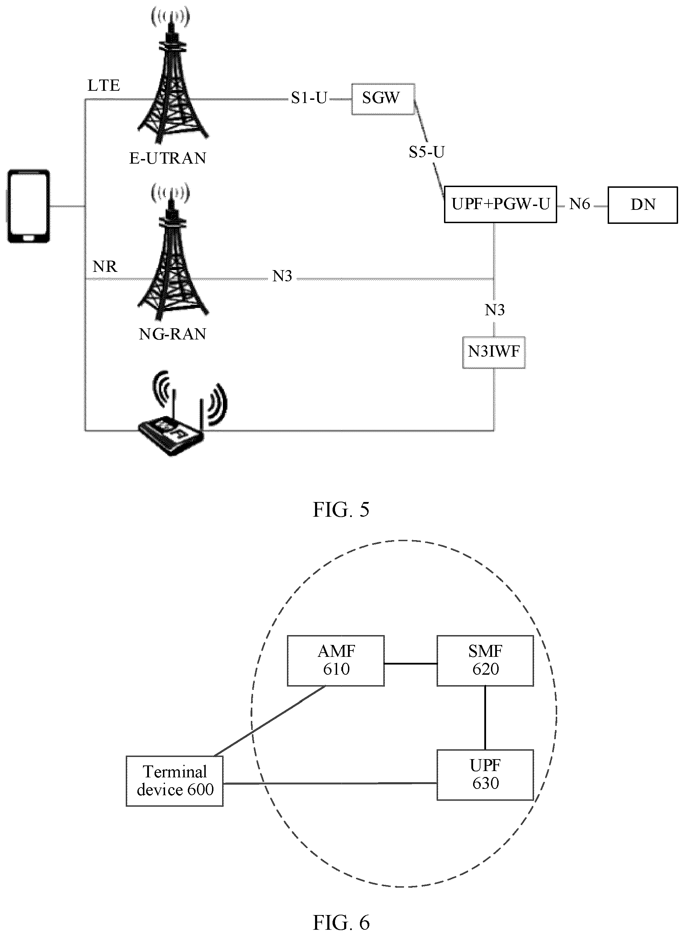

For example, an existing multi-access session technology does not support a form of performing a multi-access session over at least two non-3GPP paths for transmission, as shown in FIG. 2, where the at least two non-3GPP paths include a trusted non-3GPP path and an untrusted non-3GPP path. For another example, an existing multi-access session technology does not support a form of performing a multi-access session over at least two 3GPP paths for transmission, as shown in FIG. 3. For another example, an existing multi-access session technology does not support a form of performing a multi-access session over one 3GPP path and at least two non-3GPP paths for transmission, as shown in FIG. 4. For another example, an existing multi-access session technology does not support a form of performing a multi-access session over at least two 3GPP paths and one non-3GPP path for transmission, as shown in FIG. 5.

In addition, if a current scenario is that a multi-access session is performed over at least two non-3GPP paths for transmission, a plurality of N3GPP paths coexist for N3GPP path switching. Consequently, service flow data offloading cannot be supported in a switching process. In addition, due to a requirement of the network, it is possible that only one path is finally allowed to be retained after the switching is completed. However, after target path registration is completed, the existing UE often cannot complete a switching procedure on time, or does not actively trigger deregistration of an original path after a switching procedure is completed. Consequently, the UE maintains a dual-registration state in the network for a long time, and the UE cannot obtain a service from the network.

Therefore, how to support the offloading of the service flow data in an N3GPP path switching process in the multi-access session, ensure communication continuity, and reduce system overheads needs to be resolved.

Based on this, in embodiments of this application, to implement the N3GPP path switching in the multi-access session and better ensure the communication continuity, embodiments of this application provide a non-3GPP path switching method.

It should be noted that a multi-access session management procedure in embodiments of this application may be a multi-access session establishment procedure, a multi-access session modification procedure, a multi-access session addition procedure, a multi-access session release procedure, a multi-access session activation procedure, or the like. This is not limited herein.

FIG. 6 is a diagram of a simplified architecture of non-3GPP path switching in a multi-access session according to an embodiment of this application. A communication system may include a terminal device 600, an access and mobility management function (access and mobility management function, AMF) network element 610, a session management function (session management function, SMF) network element 620, and a user plane function (user plane function, UPF) network element 630.

The terminal device 600 may also be referred to as user equipment (user equipment, UE), a mobile station, a mobile terminal, or the like. In FIG. 6, the UE represents the terminal. The terminal may be widely used in various scenarios such as device-to-device (device-to-device, D2D), vehicle to everything (vehicle to everything, V2X) communication, machine-type communication (machine-type communication, MTC), an Internet of things (internet of things, IoT), virtual reality, augmented reality, industrial control, self-driving, remote medical, a smart grid, smart furniture, smart office, a smart wearable device, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form used by the terminal are not limited in embodiments of this application.

Specifically, in embodiments of this application, the terminal device may be configured to:
determine to perform non-3GPP transmission path switching in a multi-access session, send a first session request message to a session management device, receive a second offloading rule sent by the session management device, and determine a transmission path based on the second offloading rule.

The AMF 610 is configured to perform mobility management, access authentication/authorization, and the like. In addition, the access and mobility management function network element is further responsible for transferring a user policy to the terminal.

Specifically, in embodiments of this application, the AMF may be configured to:
determine to perform non-3GPP transmission path switching in the multi-access session, send a second request message to the session management device, receive the second offloading rule sent by the session management device, and send the second offloading rule to the terminal device.

The SMF 620 is configured to perform session management, control policy execution, user plane function network element selection, Internet protocol (internet protocol, IP) address assignment for the terminal, and the like.

Specifically, in embodiments of this application, the SMF may be configured to:
determine to perform non-3GPP transmission path switching in the multi-access session, and send a first offloading rule to a user plane device and/or send the second offloading rule to the terminal device.

The UPF 630 is configured to perform user plane data forwarding, session/flow-level charging statistics, bandwidth limitation, and the like.

Specifically, in embodiments of this application, the UPF may be configured to:
when non-3GPP transmission path switching is performed in the multi-access session, receive the first offloading rule sent by the session management device, and determine a transmission path based on the first offloading rule.

The multi-access session described above includes at least two non-3GPP transmission paths. The first session request message includes switching indication information, and the switching indication information indicates that non-3GPP transmission path switching is to be performed and/or indicates that an established target transmission path is a non-3GPP transmission path.

The first offloading rule is for supporting the user plane device in determining a first target transmission path from the at least two non-3GPP transmission paths. The second offloading rule is for supporting the terminal device in determining a second target transmission path from the at least two non-3GPP transmission paths.

Further, in embodiments of this application, the first target transmission path may be one or more of a plurality of non-3GPP transmission paths. The second target transmission path may be one or more of the plurality of non-3GPP transmission paths.

In addition, when none of the non-3GPP transmission paths is available, the first target transmission path in embodiments of this application may alternatively not include the non-3GPP transmission path. Similarly, when none of the non-3GPP transmission paths is available, the second target transmission path in embodiments of this application may alternatively not include the non-3GPP transmission path.

In embodiments of this application, the first offloading rule is for supporting the user plane device in determining the first target transmission path from the at least two non-3GPP transmission paths, which may mean that when performing the non-3GPP transmission path, the user plane device may determine the transmission path by using the first offloading rule. Similarly, the second offloading rule is for supporting the terminal device in determining the second target transmission path from the at least two non-3GPP transmission paths, which may mean that when performing the non-3GPP transmission path, the user plane device may determine the transmission path by using the second offloading rule.

Optionally, the communication system may further include another network element, another network, or the like. For example, the communication system may further include a unified data management (unified data management, UDM) network element, a policy control function (policy control function, PCF) network element, and a network DN located outside a carrier network. This is not limited herein.

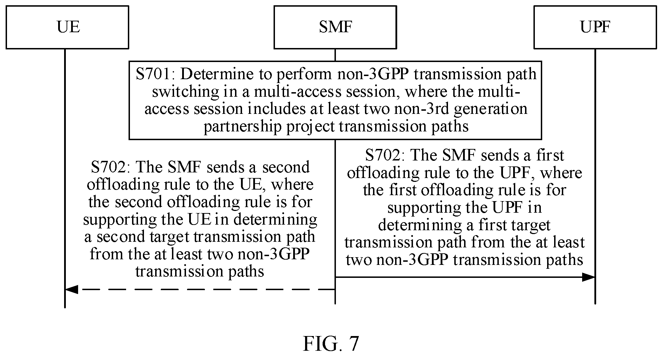

The following provides a communication path switching method according to an embodiment of this application. FIG. 7 is an example flowchart of a communication method according to an embodiment of this application. The communication method may include the following operations. The embodiment shown in FIG. 7 may be applied to a communication system in a multi-session access scenario in which there are at least two non-3GPP paths, for example, the communication system shown in FIG. 6.

**S701: An SMF determines to perform non-3GPP transmission path switching in a multi-access session, where the multi-access session includes at least two non-3GPP transmission paths.**

In this embodiment of this application, the SMF may determine, in a plurality of manners, whether to perform non-3GPP path switching.

**Determining manner 1:** The SMF receives a first session request message from UE, and determines, based on the first session request message, to perform non-3GPP path switching.

The first session request message may be a session establishment request message, or may be a session modification request message. This is not limited herein.

For example, when the first session request message includes first switching indication information, the SMF determines, based on the first switching indication information, to perform non-3GPP path switching, and the first switching indication information indicates that non-3GPP transmission path switching is to be performed and/or indicates that an established target transmission path is a non-3GPP transmission path.

When the first switching indication message indicates that the established target transmission path is the non-3GPP transmission path, and when the SMF determines that an established source transmission path of the multi-access session is a non-3GPP transmission path, the SMF determines, based on the session request, to perform non-3GPP transmission path switching.

Further, in this embodiment of this application, the first session request message may further include a session identifier of the multi-access session, and the session identifier is for determining the multi-access session of a terminal device.

**Determining manner 2:** The SMF receives a second session request message from an AMF, and determines, based on the second session request message, to perform non-3GPP path switching.

The second session request message may be a session create session context message, or may be a session update session context message. This is not limited herein.

For example, when the second session request message includes second switching indication information, the SMF determines, based on the second switching indication information, to perform non-3GPP path switching, and the second switching indication information indicates that non-3GPP transmission path switching is to be performed and/or indicates that an established target transmission path is a non-3GPP transmission path.

When the second switching indication message indicates that the established target transmission path is the non-3GPP transmission path, and when the SMF determines that an established source transmission path of the multi-access session is a non-3GPP transmission path, the SMF determines, based on the session request, to perform non-3GPP transmission path switching.

Further, in this embodiment of this application, the second session request message may further include a session identifier and/or a session context identifier of the multi-access session, and the session identifier is for determining the multi-access session of the terminal device.

The second session request message may be sent by the AMF after the AMF determines to perform non-3GPP transmission path switching in the multi-access session.

For example, after receiving a non-access stratum (non-access stratum, NAS) message sent by the terminal device for requesting path switching, and determining to perform non-3GPP transmission path switching in the multi-access session, the AMF triggers sending of the second session request message to the SMF. The NAS message includes switching indication information, and the switching indication information indicates that non-3GPP transmission path switching is to be performed and/or indicates that the established target transmission path is the non-3GPP transmission path.

**S702: The SMF sends a first offloading rule to a UPF and/or sends a second offloading rule to the UE.**

The first offloading rule is for supporting the user plane device in determining a first target transmission path from the at least two non-3GPP transmission paths, and the second offloading rule is for supporting the terminal device in determining a second target transmission path from the at least two non-3GPP transmission paths.

In an example, when sending the second offloading rule to the UE, the SMF may send the second offloading rule to the corresponding UE through the AMF.

In an example, that the SMF sends the first offloading rule to the corresponding UPF may be implemented by sending, to the UPF, an N4 session modification request carrying the first offloading rule.

Further, in this embodiment of this application, the first offloading rule and/or the second offloading rule that are/is for performing transmission path switching may have a plurality of types of content, which are not specifically limited to the following types:

**Content form 1:** The first offloading rule and/or the second offloading rule include/includes an offloading rule (an original offloading rule for transmission path switching) used before the non-3GPP path switching, and access priority indication information indicating to perform non-3GPP path switching.

The access priority indication information indicates a target transmission path. In this embodiment of this application, the target transmission path may be one or more of a plurality of non-3GPP transmission paths. In addition, if none of the non-3GPP transmission paths is available, the target transmission path may alternatively not include the non-3GPP transmission path.

For example, the first offloading rule includes an offloading rule used by the user plane device before the non-3GPP path switching, and access priority indication information.

The second offloading rule includes an offloading rule used by the terminal device before the non-3GPP path switching, and access priority indication information.

**Content form 2:** The first offloading rule and/or the second offloading rule include/includes an offloading rule supporting the non-3GPP path switching. The offloading rule for non-3GPP path switching is different from an original offloading rule for path switching.

For example, the first offloading rule includes a third offloading rule, where the third offloading rule indicates the user plane device to perform redundant transmission over the at least two non-3GPP transmission paths.

The second offloading rule includes a fourth offloading rule, and the fourth offloading rule indicates the terminal device to perform redundant transmission over the at least two non-3GPP transmission paths.

**Content form 3:** The first offloading rule and/or the second offloading rule include/includes an offloading rule supporting the non-3GPP path switching, an original offloading rule for path switching, and a trigger condition corresponding to the offloading rule.

For example, the first offloading rule includes an offloading rule used by the user plane device before the non-3GPP path switching, a third offloading rule, and a rule application condition, where the third offloading rule indicates the user plane device to perform redundant transmission over the at least two non-3GPP transmission paths, and the rule application condition indicates to apply the offloading rule when path switching is performed.

The second offloading rule includes an offloading rule used by the terminal device before the non-3GPP path switching, a fourth offloading rule, and a rule application condition, where the fourth offloading rule indicates the terminal device to perform redundant transmission over the at least two non-3GPP transmission paths, and the rule application condition indicates to apply the offloading rule when path switching is performed.

Based on the foregoing content forms 1 to 3, several types of actual content that may be indicated by the first offloading rule and the second offloading rule are listed as follows:

The first offloading rule and/or the second offloading rule indicate/indicates the UPF to switch, to a target non-3GPP transmission path for transmission, a service flow transmitted over a source non-3GPP transmission path.

When the source non-3GPP transmission path is an untrusted non-3GPP transmission path, the target non-3GPP transmission path may be a trusted non-3GPP transmission path. When the source non-3GPP transmission path is a trusted non-3GPP transmission path, the target non-3GPP transmission path may be an untrusted non-3GPP transmission path.

In addition, when the multi-access session further includes a 3GPP transmission path, the first offloading rule may further indicate the UPF to switch, to a target 3GPP transmission path for transmission, the service flow transmitted over the source non-3GPP transmission path. The second offloading rule may further indicate the UE to switch, to the target 3GPP transmission path for transmission, the service flow transmitted over the source non-3GPP transmission path.

The first offloading rule and/or the second offloading rule are/is determined based on a local configuration before the SMF sends the first offloading rule to the UPF and/or sends the second offloading rule to the UE; or the first offloading rule and/or the second offloading rule are/is determined based on a policy and charging control (policy and charging control, PCC) rule obtained from a PCF before the SMF sends the first offloading rule to the UPF and/or sends the second offloading rule to the UE.

In addition, to better meet a requirement of a network, complete a switching procedure in a timely manner, and avoid a case in which the UE maintains a dual-registration state in the network for a long time and a case in which the UE cannot obtain a service from the network, in this embodiment of this application, after the non-3GPP path switching is completed, release of a signaling connection of the source non-3GPP transmission path may be further triggered.

In this embodiment of this application, the release of the signaling connection may be access network signaling release, or may be terminal device deregistration.

In an example, in a process of performing non-3GPP path switching, the AMF determines that a first condition for releasing a signaling connection is met.

For example, after determining that the UE completes switching from the trusted non-3GPP path to the untrusted non-3GPP path, the AMF triggers release of the trusted non-3GPP path.

For another example, after determining that the UE completes switching from the untrusted non-3GPP path to the trusted non-3GPP path, the AMF triggers release of the untrusted non-3GPP path.

Specifically, the first condition in this embodiment of this application is not specifically limited to the following several cases:

**Case 1:** A first timer started by the AMF after the terminal device completes registration of the target non-3GPP transmission path expires, where the first timer is configured to indicate to trigger release of the signaling connection of the source non-3GPP transmission path.

For example, after determining that the UE completes registration of the first target transmission path when the UE performs non-3GPP path switching, the AMF starts a source path deregistration timer. After determining that the source path deregistration timer expires, the AMF initiates a deregistration request to the UE.

**Case 2:** A second timer started by the AMF after the terminal device completes registration of the target non-3GPP transmission path expires, and the terminal device does not complete switching of the target non-3GPP transmission path, where the second timer is configured to indicate to trigger release of the signaling connection of the target non-3GPP transmission path.

For example, after determining that the UE completes registration of the first target transmission path when the UE performs non-3GPP path switching, the AMF starts a target path deregistration timer. After determining that the target path deregistration timer expires, the AMF initiates a deregistration request to the UE.

**Case 3:** After the AMF receives a signaling connection release request message from the UE, the AMF initiates a deregistration request to the UE, where the signaling connection release request message indicates the AMF to initiate, to the UE, a deregistration request for the target path or the source path.

To better describe the communication path switching method provided in this application, the method is further described in detail based on the content shown in FIG. 7 and with reference to the following two path switching scenarios.

Some steps in the following path switching manners may be optional, and a step sequence does not represent an actual execution sequence. Therefore, this application is not limited to being performed completely according to the following steps and sequences. In addition, the following two path switching scenarios may be combined for application, and this is not limited herein.

**Scenario 1: Perform path switching based on the first offloading rule and/or the second offloading rule provided in this application.**

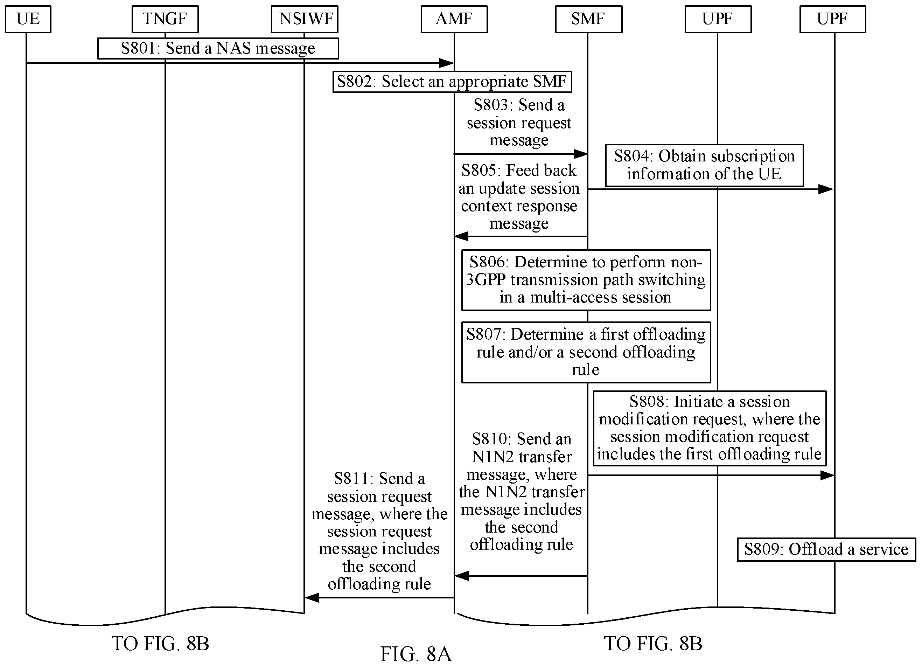

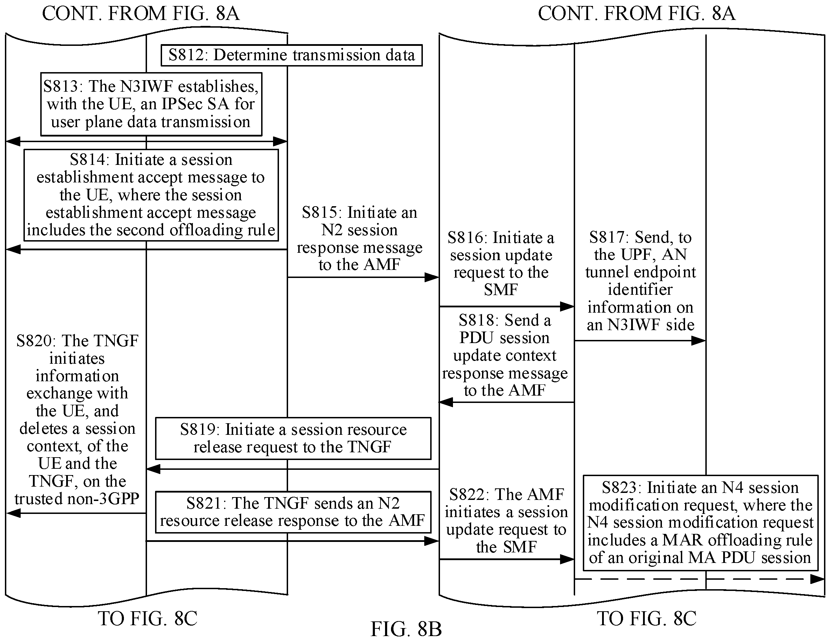

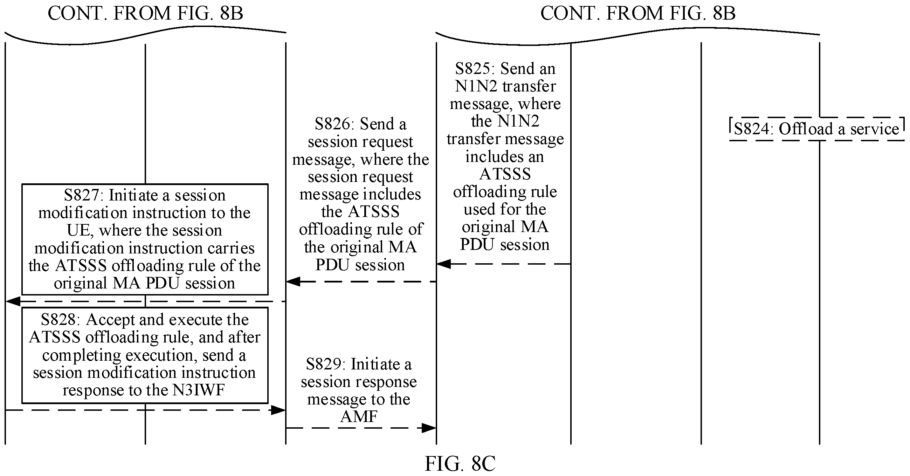

Refer to FIG. 8A to FIG. 8C. The following steps may be performed in a method corresponding to Scenario 1. It is assumed that before a procedure starts, UE has established an MA PDU session via a trusted non-3GPP gateway function (trusted non-3GPP gateway function, TNGF). In addition, registration has been completed via a non-3GPP interworking function (non-3GPP interworking function, N3IWF), and an Internet protocol security (internet protocol security, IPsec) security signaling plane connection between the UE and the N3IWF has been established.

S801: The UE sends a NAS message to an AMF on an untrusted non-3GPP path, where the NAS message carries a first session request message.

The first session request message may be a session establishment request message, or may be a session modification request message.

In an example, the NAS message carries a session identifier and/or first switching indication information, and the session identifier is for uniquely determining the session.

The first switching indication information may be a session request type (Request Type), and the request type may indicate an existing PDU session (Existing PDU Session), a multi-access session request (MAPDU Request), or a new indication identifier.

For example, the first switching indication information indicates that non-3GPP transmission path switching is to be performed and/or indicates that an established target transmission path is a non-3GPP transmission path.

Further, in this embodiment of this application, the session identifier and/or the first switching indication information may be carried in the first session request message, or the session identifier may be carried in the NAS message other than the first session request message.

If the first switching indication information is in a first session establishment request, the AMF does not sense the first switching indication information, and an SMF directly senses the first switching indication information. If the first switching indication information is in the NAS message other than the first session establishment request, the AMF directly senses the indication, and the AMF may indicate the first switching indication information to the SMF in a subsequent step S803.

S802: The AMF selects an appropriate SMF based on the received NAS message.

Specifically, the AMF may select the appropriate SMF based on the session identifier in the received NAS message.

S803: The AMF sends a second session request message to the SMF.

In an example, after determining, based on the NAS message received from the terminal device, to perform non-3GPP path switching, the AMF may send the second session request message to the SMF. The second session request message may be a session create session context message or a session update session context message.

For example, after identifying the first switching indication information carried in the NAS message, and determining, based on the first switching indication information, that a current session management procedure is for performing non-3GPP transmission path switching, the AMF sends the second session request message to the SMF.

In an example, the second session request message may carry one or more of an identifier of the session, a context identifier of the session, second switching indication information, or a radio access technology type (RAT Type).

The second switching indication information indicates an access path type requested by the current session.

For example, the second switching indication information indicates that non-3GPP transmission path switching is to be performed and/or indicates that an established target transmission path is a non-3GPP transmission path.

The AMF may directly use the first switching indication information in the received NAS message as the second switching indication information in the second session request message, and send the second switching indication information to the SMF.

It may be understood that, in this case, the first switching indication information is the same as the second switching indication information. Similarly, the second session request message sent by the AMF to the SMF may also carry the session identifier, the session context identifier, and/or the like that are/is indicated in the NAS message. This is not limited herein.

S804: The SMF obtains subscription information of the UE from a unified data management (unified data management, UDM) device based on the second session request message, where the subscription information includes session context information of the UE.

Specifically, the SMF may obtain the subscription information of the UE from the UDM based on the session identifier or the session context identifier in the second session request message.

S805: The SMF feeds back an update session context response message to the AMF.

S806: The SMF determines to perform non-3GPP transmission path switching in the multi-access session.

In an example, the SMF may determine, based on the second session request message received from the AMF, to perform non-3GPP transmission path switching.

For example, the SMF determines, based on the second switching indication information included in the second session request message, to perform non-3GPP transmission path switching. In this case, the second switching indication information indicates to perform non-3GPP transmission path switching.

For another example, when the second switching indication information indicates that the established target transmission path is the non-3GPP transmission path, and when the SMF determines that an established source transmission path of the multi-access session is a non-3GPP transmission path, the SMF determines, based on the session request, to perform non-3GPP path switching.

S807: The SMF determines a first offloading rule for the UPF and/or a second offloading rule for the UE.

In an example, the SMF may determine the first offloading rule and/or the second offloading rule based on a local configuration; or the SMF may determine the first offloading rule and/or the second offloading rule based on a PCC rule obtained from a PCF.

The first offloading rule is included in a multi-access rule (Multiple Access Rule), and is for supporting the UPF in determining a first target transmission path from a plurality of transmission paths. The multi-access session includes at least two non-3GPP transmission paths.

The second offloading rule is included in an access traffic steering switching splitting rule (Access Traffic Steering Switching Splitting rule, ATSSS rule), and is for supporting the UE in determining a second target transmission path from a plurality of transmission paths.

For brevity of description, for content of the first offloading rule and/or the second offloading rule, refer to the related content descriptions shown in FIG. 7. Details are not described herein again.

S808: The SMF selects, based on the local multi-access session context, a UPF corresponding to the multi-access session, to initiate an N4 session modification request, where the N4 session modification request includes the first offloading rule.

In an example, the first offloading rule may be carried in an N4 rule included in the N4 session modification request.

For example, in this embodiment of this application, the N4 rule may include rules such as a packet detection rule (Packet Detection Rule, PDR), a forwarding action rule (Forwarding Action Rule, FAR), and a multi-access rule (Multi Access Rule, MAR). The MAR rule includes the first offloading rule.

S809: The UPF offloads a service data flow based on the received first offloading rule.

S810: The SMF sends an N1N2 transfer message to the AMF, where the N1N2 transfer message includes the second offloading rule.

In an example, the N1N2 transfer message includes information such as a session identifier, N2 interface session management information (N2 SM information), and an N1 interface session management container (N1 SM Container).

The N1 SM container includes session-related parameter information such as a PDU session establishment accept message (PDU Session Establishment Accept) and the ATSSS rule. The ATSSS rule is the first offloading rule.

S811: The AMF initiates a session request message to the N3IWF, where the session request message carries the second offloading rule.

S812: The N3IWF determines, based on a policy and a configuration of the N3IWF, a quantity of Internet protocol security (internet protocol security, IPsec) child SAs to be established and quality of service (quality of service, QoS) flow (Flow) data to be transmitted by each IPsec child SA.

S813: The N3IWF establishes, with the UE, an IPsec security association (Security Association, SA) for user plane data transmission.

In this process, the N3IWF assigns an IP address (UP_IP_ADDRESS) of the IPsec child SA to the UE. To be specific, if the UE needs to send uplink data, in an inner (inner) IP protocol stack, a destination IP address should be set to UP_IP_ADDRESS, and a source IP address is the "inner" IP address (address) assigned during registration.

S814: After an IPsec user plane connection is completed, the N3IWF initiates a session establishment accept message to the UE, where the session establishment accept message carries the second offloading rule.

S815: The N3IWF initiates an N2 session response message to the AMF, to indicate that a user plane resource on an N3IWF access network side has been established, where the N2 session response message carries a tunnel endpoint identifier on an N3IWF side.

S816: The AMF initiates a session update request to the SMF, and forwards session-related information from the access network side.

S817: The SMF sends, to the UPF in an N4 session modification procedure, access network (access network, AN) tunnel endpoint identifier information on the N3IWF side.

S818: The SMF sends a protocol data unit (protocol data unit, PDU) session update context response message to the AMF.

S819: After establishment of an N3 tunnel of the untrusted non-3GPP path is completed, the AMF triggers release of an N2 resource of the source trusted non-3GPP path, and initiates an N2 session resource release request to the TNGF.

S820: The TNGF initiates information exchange with the UE, and deletes a session context, of the UE and the TNGF, on the trusted non-3GPP.

S821: The TNGF sends an N2 resource release response to the AMF.

S822: The AMF initiates a session update request to the SMF, to indicate that a trusted non-3GPP path session resource has been released.

In an example, if the first offloading rule includes an offloading rule used by the UPF before the non-3GPP path switching, and/or the second offloading rule includes an offloading rule used by the terminal device before the non-3GPP path switching, a subsequent procedure in the solution of the present invention is not performed.

In an example, if the first offloading rule does not include an offloading rule used by the UPF before the non-3GPP path switching, and/or the second offloading rule does not include an offloading rule used by the terminal device before the non-3GPP path switching, subsequent steps S823 to S829 are performed.

S823: The SMF initiates an N4 session modification request after the switching is completed, where the N4 session modification request carries a MAR offloading rule of an original MA PDU session.

The MAR offloading rule of the original MA PDU session is an offloading rule used before the non-3GPP path switching.

S824: After receiving the N4 session modification request, the UPF accepts and executes the MAR offloading rule.

After S824 is performed, downlink data of the UE is offloaded according to the MAR offloading rule.

S825: The SMF initiates an N1N2 transfer message to the AMF, where the N1N2 transfer message carries an ATSSS offloading rule used for the original MA PDU session.

S826: The AMF initiates a session request to the N3IWF, where the session request carries the ATSSS offloading rule of the original MA PDU session.

S827: The N3IWF initiates a PDU session modification instruction to the UE, where the PDU session modification instruction carries the ATSSS offloading rule of the original MA PDU session.

S828: After receiving the PDU session modification instruction, the UE accepts and executes the ATSSS offloading rule, and after completing execution, the UE sends a PDU session modification instruction response to the N3IWF.

After S828 is performed, uplink data of the UE is offloaded according to the MAR offloading rule.

S829: The N3IWF forwards a response message received from the UE to the AMF.

In Scenario 1, a problem of session continuity during the switching is mainly resolved. It can be learned from the flowchart shown in FIG. 3 that the overall switching procedure may be divided into four phases: The UE registers with the target path, the MA PDU session is established/added on the target path, the session resource on the source path is released, and the UE deregisters from the source path.

It should be noted that, in this embodiment, an example in which the non-3GPP path in the MAPDU is switched from the trusted non-3GPP access path to the untrusted non-3GPP access path is used, and vice versa. For brevity of description, a process in which the non-3GPP path in the MAPDU is switched from the untrusted non-3GPP access path to the trusted non-3GPP access path may be transformed from the foregoing content shown in FIG. 8A to FIG. 8C, with the only need to replace the N3IWF with the TNGF. Details are not described herein again.

According to the foregoing embodiment, the MA PDU session switching procedure enables the UE and the UPF to trigger a new offloading rule in a switching process. The new offloading rule may support the UE and/or the UPF in selecting an appropriate path from a plurality of non-3GPP access paths for data transmission, to ensure service continuity during session switching.

**Scenario 2: Perform path switching based on a deregistration principle provided in this application.**

In this embodiment of this application, in Scenario 2, there are a plurality of cases in which path switching is performed based on the deregistration principle, and the cases are not specifically limited to the following several cases.

**Deregistration case 1:** After a source path deregistration timer expires, trigger source path deregistration.

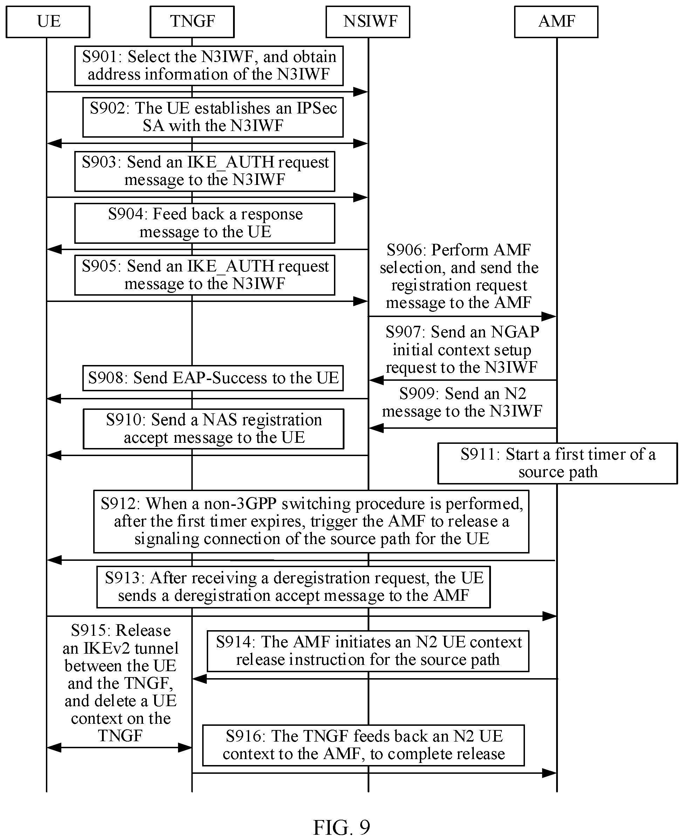

Refer to FIG. 9. The following steps may be performed in Deregistration case 1. In the following FIG. 9, a registration procedure in an untrusted 3GPP access technology is used as an example.

S901: UE is connected to an untrusted non-3GPP access network, and is assigned an IP address. The UE selects an N3IWF, and obtains address information of the N3IWF.

S902: The UE establishes an IPsec security association (IPsec Security Association, IPsec SA) with the N3IWF by initiating an Internet key exchange (Internet Key Exchange, IKE) initial exchange.

S903: The UE sends an IKE_AUTH request message to the N3IWF.

In an example, the UE may include first indication information in a registration request message, and the first indication information may indicate to perform non-3GPP path switching and/or indicate to establish a second non-3GPP transmission path.

Based on this, the first indication information may be used by an AMF to determine whether the current registration request is for subsequent session switching. In addition, if the registration request message does not carry the first indication information, the AMF may alternatively determine, based on local configuration information when receiving the registration request message, whether the current registration request is for subsequent session switching.

S904: The N3IWF sends an IKE_AUTH response message to the UE.

The response message includes an EAP-Request/5G-Start data packet. The EAP-Request/5G-Start data packet may be for instructing the UE to initiate an EAP-5G session, for example, instructing the UE to start to send a NAS message (by encapsulating the NAS message in the EAP-5G data packet).

S905: The UE sends an IKE_AUTH request message to the N3IWF.

The request message may include an EAP-Response/5G-NAS data packet, and the data packet may include an AN parameter and the registration request message. The AN parameter may include parameter information used by the N3IWF to select an AMF, for example, a GUAMI and a selected public land mobile network (public land mobile network, PLMN) ID (or a combination of a PLMN ID and a network identifier (network identifier, NID)).

S906: The N3IWF performs AMF selection, and sends the registration request message to the AMF.

In an example, when the request message sent by the UE to the N3IWF includes the first indication information, the N3IWF may also forward the first indication information in the registration request message to the AMF.

S907: The AMF sends an NGAP initial connection setup request (NGAP initial context setup request) message to the N3IWF, where the NGAP initial context setup request message includes an N3IWF key.

In an example, S907 is performed after authentication between the AMF and the UE succeeds.

For example, the AMF selects an authentication server function (authentication server function, AUSF), and sends an authentication request message to the AUSF. Then, the AUSF performs an authentication procedure for the UE, and obtains authentication data from a UDM.

An authentication-related data packet may be encapsulated by using a NAS message, and the NAS message may be encapsulated by using an EAP/5G-NAS data packet.

After the authentication is completed, the AUSF sends a security anchor function (seat) key to the AMF, and the AMF derives a NAS security key and the N3IWF security key from the key. The N3IWF key is used by the UE and the N3IWF to establish the IPsec SA.

Then, the AMF sends a NAS security mode command (NAS security mode command) to the UE, to activate NAS security, and performs S907 after the NAS security is successfully activated.

S908: The N3IWF sends extensible authentication protocol (extensible authentication protocol, EAP) success (Success) information to the UE.

In this case, an EAP-5G session is completed, and no EAP-5G data packet is exchanged subsequently.

S909: The AMF sends an N2 message to the N3IWF, where the N2 message includes a NAS registration accept (NAS Registration Accept) message to be sent to the UE.

S910: The N3IWF sends the NAS registration accept message to the UE by using a just established signaling IPsec SA (signaling IPsec SA).

S911: The AMF chooses to start a first timer of a source path (trusted non-3GPP).

In an example, after the registration procedure is completed, the AMF determines, based on the switching indication information or the locally configured UE registration information, that the current registration request is applicable to the subsequent session switching, and chooses to start the first timer of the source path (trusted non-3GPP). The first timer is configured to release a signaling connection of the source path.

S912: When the UE performs the switching procedure between the trusted non-3GPP and untrusted non-3GPP, after the first timer expires, the UE triggers the AMF to release the signaling connection of the source path for the UE.

For example, after the first timer expires, the AMF is triggered to perform a procedure of releasing an access network side resource on the source path, or the AMF is triggered to perform a UE deregistration procedure on the source path.

S913: After receiving a deregistration request, the UE sends a deregistration accept message to the AMF.

S914: The AMF initiates, to a TNGF, an N2 UE context release instruction for the source path (trusted non-3GPP).

S915: Initiate an IKE INFORMATIONAL message between the TNGF and the UE, release an IKEv2 tunnel between the UE and the TNGF, and delete a UE context on the TNGF.

S916: The TNGF feeds back an N2 UE context to the AMF, to complete release.

According to the foregoing embodiment, the AMF determines, by determining whether the UE is used for subsequent session switching during registration, to start the deregistration timer on the source path, so that a case in which the UE maintains a dual-registration state on the trusted non-3GPP path and the untrusted 3GPP path for a long time is avoided. In addition, MA PDU session switching can be performed on a non-3GPP path.

**Deregistration case 2:** After a target path deregistration timer expires, trigger target path deregistration.

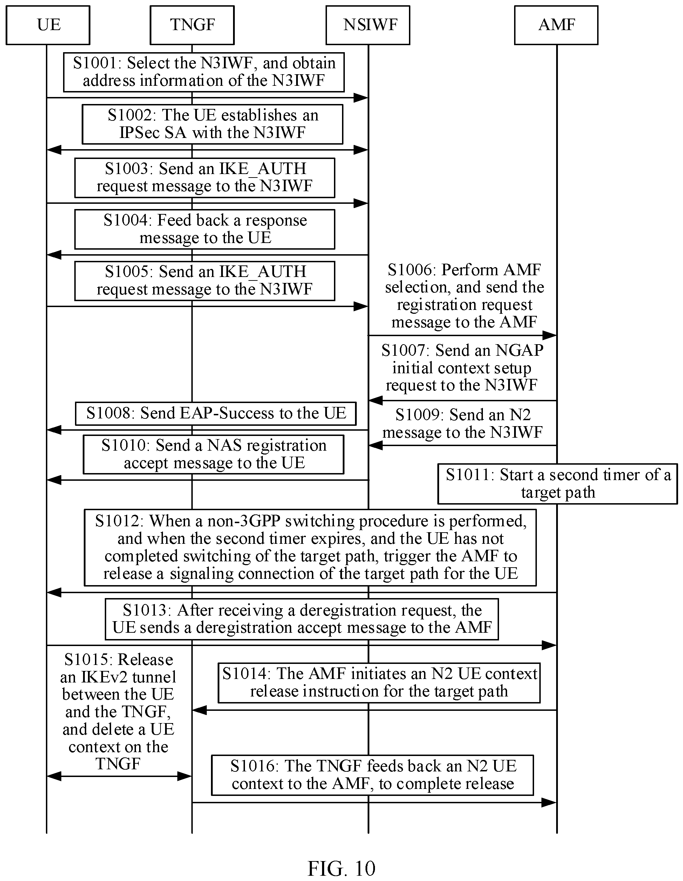

Refer to FIG. 10. The following steps may be performed in Deregistration case 2. In the following FIG. 5, a registration procedure in an untrusted 3GPP access technology is used as an example.

S1001: UE is connected to an untrusted non-3GPP access network, and is assigned an IP address. The UE selects an N3IWF, and obtains address information of the N3IWF.

S1002: The UE establishes an IPsec security association (IPSec SA) with the N3IWF by initiating an Internet key exchange (Internet Key Exchange, IKE) initial exchange.

S1003: The UE sends an IKE_AUTH request message to the N3IWF.

In an example, the UE may include first indication information in a registration request message, and the first indication information may indicate to perform non-3GPP path switching and/or indicate to establish a second non-3GPP transmission path.

Based on this, the first indication information may be used by an AMF to determine whether the current registration request is for subsequent session switching. In addition, if the registration request message does not carry the first indication information, the AMF may alternatively determine, based on local configuration information when receiving the registration request message, whether the current registration request is for subsequent session switching.

S1004: The N3IWF sends an IKE_AUTH response message to the UE.

The response message includes an EAP-Request/5G-Start data packet. The EAP-Request/5G-Start data packet may be for instructing the UE to initiate an EAP-5G session, for example, instructing the UE to start to send a NAS message (by encapsulating the NAS message in the EAP-5G data packet).

S1005: The UE sends an IKE_AUTH request message to the N3IWF.

The request message may include an EAP-Response/5G-NAS data packet, and the data packet may include an AN parameter and a registration request message. The AN parameter may include parameter information used by the N3IWF to select an AMF, for example, a GUAMI and a selected PLMN ID (or a PLMN ID and an NID).

S1006: The N3IWF performs AMF selection, and sends the registration request message to the AMF.

In an example, when the request message sent by the UE to the N3IWF includes the first indication information, the N3IWF may also forward the first indication information in the registration request message to the AMF.

S1007: The AMF sends an NGAP initial context setup request message to the N3IWF, where the NGAP initial context setup request message includes an N3IWF key.

In an example, S1007 is performed after authentication between the AMF and the UE succeeds.

For example, the AMF selects an AUSF, and sends an authentication request message to the AUSF. Then, the AUSF performs an authentication procedure for the UE, and obtains authentication data from a UDM. An authentication-related data packet may be encapsulated by using a NAS message, and the NAS message may be encapsulated by using an EAP/5G-NAS data packet.

After the authentication is completed, the AUSF sends an SEAF key to the AMF, and the AMF derives a NAS security key and the N3IWF security key from the key. The N3IWF key is used by the UE and the N3IWF to establish the IPsec SA.

Then, the AMF sends a NAS security mode command to the UE, to activate NAS security, and performs S1007 after the NAS security is successfully activated.

S1008: The N3IWF sends EAP-Success to the UE.

In this case, an EAP-5G session is completed, and no EAP-5G data packet is exchanged subsequently.

S1009: The AMF sends an N2 message to the N3IWF, where the N2 message includes a NAS registration accept (NAS Registration Accept) message to be sent to the UE.

S1010: The N3IWF sends the NAS registration accept message to the UE by using a just established signaling IPsec SA.

S1011: The AMF chooses to start a second timer of a target path (trusted non-3GPP).

In an example, after the registration procedure is completed, the AMF determines, based on the switching indication information or the locally configured UE registration information, that the current registration request is applicable to the subsequent session switching, and chooses to start the second timer of the target path (trusted non-3GPP). The second timer is configured to release a signaling connection of a source path.

S1012: When the UE performs the switching procedure between the trusted non-3GPP and untrusted non-3GPP, and when the second timer expires, and the UE has not completed switching of the target path, the UE triggers the AMF to release the signaling connection of the source path for the UE.

For example, after the second timer expires, the AMF is triggered to perform a procedure of releasing an access network side resource on the target path, or the AMF is triggered to perform a UE deregistration procedure on the target path.

S1013: After receiving a deregistration request, the UE sends a deregistration accept message to the AMF.

S1014: The AMF initiates, to a TNGF, an N2 UE context release instruction for the target path (trusted non-3GPP).

S1015: Initiate an IKE INFORMATIONAL message between the TNGF and the UE, release an IKEv2 tunnel between the UE and the TNGF, and delete a UE context on the TNGF.

S1016: The TNGF feeds back an N2 UE context to the AMF, to complete release.

According to the foregoing embodiment, the AMF determines, by determining whether the UE is used for subsequent session switching during registration, to start the deregistration timer on the target path, so that a case in which the UE maintains a dual-registration state on the trusted non-3GPP path and the untrusted 3GPP path for a long time is avoided. In addition, MA PDU session switching can be performed on a non-3GPP path.

Further, in this embodiment of this application, when performing the switching procedure between the trusted non-3GPP and the untrusted non-3GPP, the UE may send a request message for releasing a signaling connection to a corresponding AMF at any time based on an actual situation, so that the AMF that receives the request message for releasing the signaling connection releases the signaling connection on the target path or the source path for the UE. The request message for releasing the signaling connection indicates the AMF to initiate a target path or source path deregistration request to the UE.

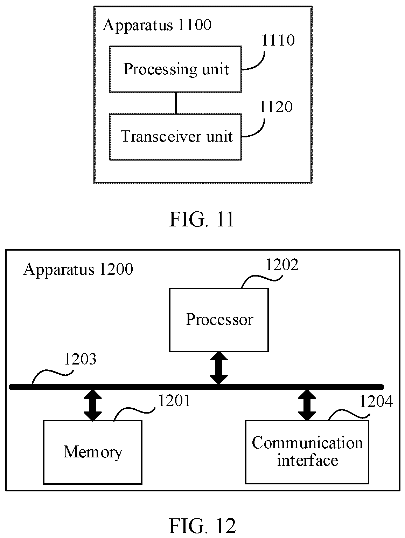

Based on a same concept as the foregoing embodiments, an embodiment of this application provides a communication apparatus. FIG. 11 and FIG. 12 each are a diagram of a possible structure of a communication apparatus according to an embodiment of this application. The communication apparatuses may be configured to implement functions of the SMF, the UE, the UPF, or the AMF in the foregoing method embodiments, and therefore can also implement beneficial effects of the foregoing method embodiments. In this embodiment of this application, the communication apparatus may be an SMF, UE, a UPF, or an AMF, or may be a module (for example, a chip) used in an SMF, UE, a UPF, or an AMF.

As shown in FIG. 11, a communication apparatus 1100 includes a processing unit 1110 and a transceiver unit 1120. The communication apparatus 1100 is configured to implement functions of the SMF, the UE, the UPF, or the AMF in the method embodiment shown in FIG. 6 to FIG. 9.

When the communication apparatus 1100 is configured to implement a function of the SMF, the processing unit 1110 is configured to determine to perform non-3GPP transmission path switching in a multi-access session, where the multi-access session includes at least two non-3GPP transmission paths. The transceiver unit 1120 is configured to send a first offloading rule to a user plane device and/or send a second offloading rule to a terminal device, where the first offloading rule is for supporting the user plane device in determining a first target transmission path from the at least two non-3GPP transmission paths, and the second offloading rule is for supporting the terminal device in determining a second target transmission path from the at least two non-3GPP transmission paths.

In a design, the processing unit 1110 is specifically configured to:
determine, based on a received session request message, to perform non-3GPP transmission path switching in the multi-access session, where the session request message includes switching indication information, and the switching indication information indicates that non-3GPP transmission path switching is to be performed and/or indicates that an established target transmission path is a non-3GPP transmission path; and
the session request message is a first session request message sent by the terminal device after the terminal device determines to perform the non-3GPP transmission path; or the session request message is a second session request message sent by a mobility management device after the mobility management device determines to perform the non-3GPP transmission path.

In a design, the processing unit 1110 is specifically configured to:
when the switching indication information indicates that the established target transmission path is the non-3GPP transmission path, and when it is determined that an established source transmission path of the multi-access session is the non-3GPP transmission path, determine, based on the session request, to perform non-3GPP path switching.

In a design, the session request message further includes a session identifier of the multi-access session, and the session identifier is for determining the multi-access session of the terminal device.

In a design, the session request message further includes a session context identifier of the multi-access session, and the session context identifier is for determining the multi-access session of the terminal device.

In a design, the first offloading rule includes:
an offloading rule used by the user plane device before the non-3GPP path switching, and access priority indication information, where the access priority indication information indicates the first target transmission path.

In a design, the second offloading rule includes:
an offloading rule used by the terminal device before the non-3GPP path switching, and access priority indication information, where the access priority indication information indicates the second target transmission path.

In a design, the first target transmission path is a trusted non-3GPP transmission path or an untrusted non-3GPP transmission path; and the second target transmission path is a trusted non-3GPP transmission path or an untrusted non-3GPP transmission path.

In a design, the first offloading rule includes:
a third offloading rule, where the third offloading rule indicates the user plane device to perform redundant transmission over the at least two non-3GPP transmission paths.

In a design, the second offloading rule includes:
a fourth offloading rule, where the fourth offloading rule indicates the terminal device to perform redundant transmission over the at least two non-3GPP transmission paths.

In a design, the first offloading rule includes:
an offloading rule used by the user plane device before the non-3GPP path switching, a third offloading rule, and a rule application condition, where the third offloading rule indicates the user plane device to perform redundant transmission over the at least two non-3GPP transmission paths, and the rule application condition indicates to apply the offloading rule when path switching is performed.

In a design, the second offloading rule includes:
an offloading rule used by the terminal device before the non-3GPP path switching, a fourth offloading rule, and a rule application condition, where the fourth offloading rule indicates the terminal device to perform redundant transmission over the at least two non-3GPP transmission paths, and the rule application condition indicates to apply the offloading rule when path switching is performed.

When the communication apparatus 1100 is configured to implement a function of the terminal device, the processing unit 1110 is configured to determine to perform non-3GPP transmission path switching in a multi-access session, where the multi-access session includes at least two non-3GPP transmission paths. The transceiver unit 1120 is configured to send a first session request message to a session management device, where the first session request message includes switching indication information, and the switching indication information indicates that non-3GPP transmission path switching is to be performed and/or indicates that an established target transmission path is a non-3GPP transmission path; the transceiver unit 1120 is further configured to receive a second offloading rule sent by the session management device, where the second offloading rule is for supporting the terminal device in determining a second target transmission path from the at least two non-3GPP transmission paths; and the processing unit 1110 is further configured to determine a transmission path based on the second offloading rule.

In a design, the first session request message further includes a multi-access session identifier, and the multi-access session identifier is for determining the multi-access session of the terminal device.

In a design, the second offloading rule includes:
an offloading rule used by the terminal device before the non-3GPP path switching, and access priority indication information, where the access priority indication information indicates the second target transmission path.

In a design, the second target transmission path is a trusted non-3GPP transmission path or an untrusted non-3GPP transmission path.

In a design, the second offloading rule includes:
a fourth offloading rule, where the fourth offloading rule indicates the terminal device to perform redundant transmission over the at least two non-3GPP transmission paths.

In a design, the second offloading rule includes:
an offloading rule used by the terminal device before the non-3GPP path switching, a fourth offloading rule, and a rule application condition, where the fourth offloading rule indicates the terminal device to perform redundant transmission over the at least two non-3GPP transmission paths, and the rule application condition indicates to apply the offloading rule when path switching is performed.

When the communication apparatus 1100 is configured to implement a function of the UPF, the transceiver unit 1120 is configured to: when non-3GPP transmission path switching is performed in a multi-access session, receive a first offloading rule sent by a session management device, where the first offloading rule is for supporting the user plane device in determining a first target transmission path from at least two non-3GPP transmission paths, and the multi-access session includes the at least two non-3GPP transmission paths; and the processing unit 1110 is configured to determine a transmission path based on the first offloading rule.

In a design, the first offloading rule includes:
an offloading rule used by the user plane device before the non-3GPP path switching, and access priority indication information, where the access priority indication information indicates the first target transmission path.

In a design, the first target transmission path is a trusted non-3GPP transmission path or an untrusted non-3GPP transmission path.

In a design, the first offloading rule includes:
a third offloading rule, where the third offloading rule indicates the user plane device to perform redundant transmission over the at least two non-3GPP transmission paths.

In a design, the first offloading rule includes:
an offloading rule used by the user plane device before the non-3GPP path switching, a third offloading rule, and a rule application condition, where the third offloading rule indicates the user plane device to perform redundant transmission over the at least two non-3GPP transmission paths, and the rule application condition indicates to apply the offloading rule when path switching is performed.

When the communication apparatus 1100 is configured to implement a function of the AMF, the processing unit 1110 is configured to determine to perform non-3GPP transmission path switching in a multi-access session, where the multi-access session includes at least two non-3GPP transmission paths. The transceiver unit 1120 is configured to send a second request message to a session management device, where the second request message includes switching indication information, and the switching indication information indicates that non-3GPP transmission path switching is to be performed and/or indicates that an established target transmission path is a non-3GPP transmission path; the transceiver unit 1120 is configured to receive a second offloading rule sent by the session management device, where the second offloading rule is for supporting a terminal device in determining a second target transmission path from the at least two non-3GPP transmission paths; and the transceiver unit 1120 is configured to send the second offloading rule to the terminal device.

In a design, the second request message further includes a multi-access session identifier, and the multi-access session identifier is for determining the multi-access session of the terminal device.

In a design, the second request message further includes a context identifier of the multi-access session, and the context identifier of the multi-access session is for determining the multi-access session of the terminal device.

In a design, the second offloading rule includes:
an offloading rule used by the terminal device before the non-3GPP path switching, and access priority indication information, where the access priority indication information indicates the second target transmission path.

In a design, the second target transmission path is a trusted non-3GPP transmission path or an untrusted non-3GPP transmission path.

In a design, the second offloading rule includes:
a fourth offloading rule, where the fourth offloading rule indicates the terminal device to perform redundant transmission over the at least two non-3GPP transmission paths.

In a design, the second offloading rule includes:
an offloading rule used by the terminal device before the non-3GPP path switching, a fourth offloading rule, and a rule application condition, where the fourth offloading rule indicates the terminal device to perform redundant transmission over the at least two non-3GPP transmission paths, and the rule application condition indicates to apply the offloading rule when path switching is performed.

In a design, the processing unit 1110 is configured to:
determine, based on a received non-access stratum message sent by the terminal device for requesting path switching, to perform non-3GPP transmission path switching, where the non-access stratum message includes the switching indication information, and the switching indication information indicates that the non-3GPP transmission path switching is to be performed and/or indicates that the established target transmission path is the non-3GPP transmission path.

In a design, the processing unit 1110 is further configured to:
determine, for the mobility management device, in a process of performing non-3GPP path switching, that a first condition for releasing a signaling connection is met; and release, for the mobility management device, a signaling connection of the terminal device on a target non-3GPP transmission path or a source non-3GPP transmission path.

In a design, the first condition for releasing a signaling connection includes:

A first timer started by the mobility management device after the terminal device completes registration of the target non-3GPP transmission path expires, where the first timer is configured to indicate to trigger release of a signaling connection of the source non-3GPP transmission path; or a second timer started by the mobility management device after the terminal device completes registration of the target non-3GPP transmission path expires, and the terminal device does not complete switching of the target non-3GPP transmission path, where the second timer is configured to indicate to trigger release of a signaling connection of the target non-3GPP transmission path.

In a design, the processing unit 1110 is further configured to:
send a third request message to the session management device after determining that the terminal device completes the non-3GPP transmission path switching, where the third request message indicates to apply an offloading rule used by the terminal device and/or the user plane device before the non-3GPP transmission path switching.

For more detailed descriptions of the processing unit 1110 and the transceiver unit 1120, directly refer to the related descriptions in the method embodiments shown in FIG. 7 to FIG. 10. Details are not described herein again.

FIG. 12 is a diagram of an apparatus 1200 according to an embodiment of this application. The apparatus 1200 may be an electronic apparatus or a component in an electronic apparatus, for example, a chip or an integrated circuit. The apparatus 1200 may include at least one processor 1202 and a communication interface 1204. Further, optionally, the apparatus may further include at least one memory 1201. Further, optionally, a bus 1203 may be further included. The memory 1201, the processor 1202, and the communication interface 1204 are connected through the bus 1203.

The memory 1201 is configured to provide storage space, and the storage space may store data such as an operating system and a computer program. The memory 1201 mentioned in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that the memory described in this specification aims to include but is not limited to these memories and any memory of another proper type. The processor 1202 is a module for performing an arithmetic operation and/or a logical operation, and may be specifically one or a combination of a plurality of processing modules such as a central processing unit (central processing unit, CPU), a graphics processing unit (graphics processing unit, GPU), a microprocessor unit (microprocessor unit, MPU), an application-specific integrated circuit (application-specific integrated circuit, ASIC), a field programmable gate array (field programmable gate array, FPGA), a complex programmable logic device (complex programmable logic device, CPLD), a synergistic processing unit (assisting the central processing unit to complete corresponding processing and application), and a microcontroller unit (microcontroller unit, MCU).

It should be noted that when the processor is a general-purpose processor, an ASIC, an FPGA or another programmable logic device, a discrete gate or a transistor logic device, or a discrete hardware component, a memory (storage module) may be integrated into the processor.

The communication interface 1204 may be configured to provide information input or output for the at least one processor, and/or the communication interface may be configured to receive data sent from the outside and/or send data to the outside, and may be a wired link interface including an ethernet cable and the like, or may be a wireless link (Wi-Fi, Bluetooth, universal wireless transmission, an in-vehicle short-distance communication technology, or the like) interface. Optionally, the communication interface 1204 may further include a transmitter (for example, a radio frequency transmitter or an antenna), a receiver, or the like coupled to the interface.

In some embodiments, the apparatus 1200 may be the SMF or a component in the SMF in the foregoing method embodiments, for example, a chip or an integrated circuit. The processor 1202 in the apparatus 1200 is configured to read a computer program stored in the memory 1201, to control the SMF to perform the following operations:
determining to perform non-3GPP transmission path switching in a multi-access session, where the multi-access session includes at least two non-3GPP transmission paths; and sending a first offloading rule to a user plane device and/or sending a second offloading rule to a terminal device, where the first offloading rule is for supporting the user plane device in determining a first target transmission path from the at least two non-3GPP transmission paths, and the second offloading rule is for supporting the terminal device in determining a second target transmission path from the at least two non-3GPP transmission paths.

Optionally, the processor 1202 in the SMF may be further configured to: read the program in the memory 1201, and perform a method procedure performed by the SMF in S701 and S702 shown in FIG. 7, or perform a method procedure performed by the SMF in S800 to S829 shown in FIG. 8A to FIG. 8C, or perform a method procedure performed by the SMF in S901 to S916 shown in FIG. 9, or perform a method procedure performed by the SMF in S1001 to S1016 shown in FIG. 10.

For specific details, refer to the records in the foregoing method embodiments, and details are not described again.

In some other embodiments, the apparatus 1200 may be the terminal device or a component in the terminal device in the foregoing method embodiments, for example, a chip or an integrated circuit. The processor 1202 in the apparatus 1200 is configured to read the computer program stored in the memory 1201, and control the terminal device to perform the following operations:
performing non-3GPP transmission path switching in a multi-access session, where the multi-access session includes at least two non-3GPP transmission paths; sending a first session request message to a session management device, where the first session request message includes switching indication information, and the switching indication information indicates that non-3GPP transmission path switching is to be performed and/or indicates that an established target transmission path is a non-3GPP transmission path; receiving a second offloading rule sent by the session management device, where the second offloading rule is for supporting the terminal device in determining a second target transmission path from the at least two non-3GPP transmission paths; and determining a transmission path based on the second offloading rule.

Optionally, the processor 1202 in the UE may be further configured to: read the program in the memory 1201, and perform a method procedure performed by the SMF in S701 and S702 shown in FIG. 2, or perform a method procedure performed by the SMF in S800 to S829 shown in FIG. 8A to FIG. 8C, or perform a method procedure performed by the SMF in S901 to S916 shown in FIG. 9, or perform a method procedure performed by the SMF in S 1001 to S1016 shown in FIG. 10.

For specific details, refer to the records in the foregoing method embodiments, and details are not described again.

In some other embodiments, the apparatus 1200 may be the AMF or a component in the AMF in the foregoing method embodiments, for example, a chip or an integrated circuit. The processor 1202 in the apparatus 1200 is configured to read a computer program stored in the memory 1201, to control the AMF to perform the following operations:
determining to perform non-3GPP transmission path switching in a multi-access session, where the multi-access session includes at least two non-3GPP transmission paths; sending a second request message to a session management device, where the second request message includes switching indication information, and the switching indication information indicates that non-3GPP transmission path switching is to be performed and/or indicates that an established target transmission path is a non-3GPP transmission path; receiving a second offloading rule sent by the session management device, where the second offloading rule is for supporting a terminal device in determining a second target transmission path from the at least two non-3GPP transmission paths; and sending the second offloading rule to the terminal device.

Alternatively, the processor 1202 in the apparatus 1200 is configured to read a computer program stored in the memory 1201, to control the AMF to perform the following operations:
determining, in a process of performing non-3GPP path switching, that a first condition for releasing a signaling connection is met; and releasing a signaling connection of the terminal device on a target non-3GPP transmission path or a source non-3GPP transmission path.

Optionally, the processor 1202 in the AMF may be further configured to: read the program in the memory 1201, and perform a method procedure performed by the SMF in S701 and S702 shown in FIG. 2, or perform a method procedure performed by the SMF in S800 to S829 shown in FIG. 8A to FIG. 8C, or perform a method procedure performed by the SMF in S901 to S916 shown in FIG. 9, or perform a method procedure performed by the SMF in S 1001 to S1016 shown in FIG. 10.

For specific details, refer to the records in the foregoing method embodiments, and details are not described again.

In some other embodiments, the apparatus 1200 may be the UPF or a component in the UPF in the foregoing method embodiments, for example, a chip or an integrated circuit. The processor 1202 in the apparatus 1200 is configured to read a computer program stored in the memory 1201, to control the UPF to perform the following operations:
when non-3GPP transmission path switching is performed in a multi-access session, receiving a first offloading rule sent by a session management device, where the first offloading rule is for supporting the user plane device in determining a first target transmission path from at least two non-3GPP transmission paths, and the multi-access session includes the at least two non-3GPP transmission paths; and determining a transmission path based on the first offloading rule.

Optionally, the processor 1202 in the UPF may be further configured to: read the program in the memory 1201, and perform a method procedure performed by the SMF in S701 and S702, or perform a method procedure performed by the SMF in S800 to S829 shown in FIG. 8A to FIG. 8C, or perform a method procedure performed by the SMF in S901 to S916 shown in FIG. 9, or perform a method procedure performed by the SMF in S1001 to S1016 shown in FIG. 10.

For specific details, refer to the records in the foregoing method embodiments, and details are not described again.

An embodiment of this application further provides a communication path switching system, including a terminal device, an SMF, and an AMF. Optionally, a UPF is further included.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

A person of ordinary skill in the art may understand that various numbers such as first and second in this application are merely used for differentiation for ease of descriptions, and are not used to limit the scope of embodiments of this application or represent a sequence. "And/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one" means one or more. At least two means two or more. "At least one" or a similar expression thereof means any combination of the items, including any combination of one item (piece) or a plurality of items (pieces). For example, at least one of a, b, or c may indicate: a, b, c, a and b, a and c, b and c, or a, b, and c, where a, b, and c may be singular or plural. "A plurality of" means two or more, and another quantifier is similar to this.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

All or some of the foregoing embodiments may be implemented by software, hardware, firmware, or any combination thereof. When the software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a random access memory (Random Access Memory, RAM), a flash memory, a read-only memory (Read-Only Memory, ROM), an EPROM memory, an EEPROM memory, a register, a hard disk, a removable magnetic disk, a CD-ROM, or a storage medium in any other form in the art. For example, the storage medium may connect to a processor, so that the processor may read information from the storage medium and write information to the storage medium. Alternatively, the storage medium may be integrated into a processor. The processor and the storage medium may be disposed in an ASIC.

In one or more exemplary designs, the functions described in this application may be implemented by using hardware, software, firmware, or any combination thereof. If the functions are implemented by software, these functions may be stored in a computer-readable medium or are transmitted to the computer-readable medium in a form of one or more instructions or code. The computer-readable medium includes a computer storage medium and a communication medium that enables a computer program to move from one place to another. The storage medium may be an available medium that may be accessed by any general or special computer. For example, such a computer-readable medium may include but is not limited to a RAM, a ROM, an EEPROM, a CD-ROM, or another optical disc storage, a disk storage or another magnetic storage apparatus, or any other medium that may be used to bear or store program code, where the program code is in a form of an instruction or a data structure and in a form that can be read by a general or special computer or a general or special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in a defined computer-readable medium. The disk (disk) and the disc (disc) include a compact disc, a laser disc, an optical disc, a digital versatile disc (Digital Versatile Disc, DVD), a floppy disk, and a Blu-ray disc. The disc usually copies data in a magnetic manner, and the disk usually copies data optically in a laser manner. The foregoing combination may also be included in the computer-readable medium.

## Claims

1. A communication method, wherein the method comprises:
determining, by a session management device, to perform non-3rd generation partnership project transmission path switching in a multi-access session, wherein the multi-access session comprises at least two non-3rd generation partnership project transmission paths; and
sending, by the session management device, a first offloading rule to a user plane device and/or sending a second offloading rule to a terminal device, wherein the first offloading rule is for supporting the user plane device in determining a first target transmission path from the at least two non-3rd generation partnership project transmission paths, and the second offloading rule is for supporting the terminal device in determining a second target transmission path from the at least two non-3rd generation partnership project transmission paths.

2. The method according to claim 1, wherein the determining, by a session management device, to perform non-3rd generation partnership project transmission path switching in a multi-access session comprises:
determining, by the session management device based on a received session request message, to perform non-3rd generation partnership project transmission path switching in the multi-access session, wherein the session request message comprises switching indication information, and the switching indication information indicates that non-3rd generation partnership project transmission path switching is to be performed and/or indicates that an established target transmission path is a non-3rd generation partnership project transmission path; and
the session request message is a first session request message sent by the terminal device after the terminal device determines to perform the non-3rd generation partnership project transmission path; or the session request message is a second session request message sent by a mobility management device after the mobility management device determines to perform the non-3rd generation partnership project transmission path.

3. The method according to claim 2, wherein the determining, by the session management device based on a received session request message, to perform non-3rd generation partnership project transmission path switching in the multi-access session comprises:
when the switching indication information indicates that the established target transmission path is the non-3rd generation partnership project transmission path, and when the session management device determines that an established source transmission path of the multi-access session is the non-3rd generation partnership project transmission path, determining, based on the session request, to perform non-3rd generation partnership project path switching.

4. The method according to claim 2 or 3, wherein the session request message further comprises a session identifier of the multi-access session, wherein
the session identifier is for determining the multi-access session of the terminal device.

5. The method according to any one of claims 2 to 4, wherein the session request message further comprises a session context identifier of the multi-access session, wherein
the session context identifier is for determining the multi-access session of the terminal device.

6. The method according to any one of claims 1 to 5, wherein the first offloading rule comprises:
an offloading rule used by the user plane device before the non-3rd generation partnership project path switching, and access priority indication information, wherein
the access priority indication information indicates the first target transmission path; and
the second offloading rule comprises:
an offloading rule used by the terminal device before the non-3rd generation partnership project path switching, and access priority indication information, wherein
the access priority indication information indicates the second target transmission path.

7. The method according to claim 6, wherein the first target transmission path is a trusted non-3rd generation partnership project transmission path or an untrusted non-3rd generation partnership project transmission path; and
the second target transmission path is a trusted non-3rd generation partnership project transmission path or an untrusted non-3rd generation partnership project transmission path.

8. The method according to any one of claims 1 to 5, wherein the first offloading rule comprises:
a third offloading rule, wherein the third offloading rule indicates the user plane device to perform redundant transmission over the at least two non-3rd generation partnership project transmission paths; and
the second offloading rule comprises:
a fourth offloading rule, wherein the fourth offloading rule indicates the terminal device to perform redundant transmission over the at least two non-3rd generation partnership project transmission paths.

9. The method according to any one of claims 1 to 5, wherein the first offloading rule comprises:
an offloading rule used by the user plane device before the non-3rd generation partnership project path switching, a third offloading rule, and a rule application condition, wherein the third offloading rule indicates the user plane device to perform redundant transmission over the at least two non-3rd generation partnership project transmission paths, and the rule application condition indicates to apply the offloading rule when path switching is performed; and
the second offloading rule comprises:
an offloading rule used by the terminal device before the non-3rd generation partnership project path switching, a fourth offloading rule, and a rule application condition, wherein the fourth offloading rule indicates the terminal device to perform redundant transmission over the at least two non-3rd generation partnership project transmission paths, and the rule application condition indicates to apply the offloading rule when path switching is performed.

10. A communication method, wherein the method comprises:
determining, by a terminal device, to perform non-3rd generation partnership project transmission path switching in a multi-access session, wherein the multi-access session comprises at least two non-3rd generation partnership project transmission paths;
sending, by the terminal device, a first session request message to a session management device, wherein the first session request message comprises switching indication information, and the switching indication information indicates that non-3rd generation partnership project transmission path switching is to be performed and/or indicates that an established target transmission path is a non-3rd generation partnership project transmission path;
receiving, by the terminal device, a second offloading rule sent by the session management device, wherein the second offloading rule is for supporting the terminal device in determining a second target transmission path from the at least two non-3rd generation partnership project transmission paths; and
determining, by the terminal device, a transmission path based on the second offloading rule.

11. The method according to claim 10, wherein the first session request message further comprises a multi-access session identifier, and the multi-access session identifier is for determining the multi-access session of the terminal device.

12. The method according to claim 10 or 11, wherein the second offloading rule comprises:
an offloading rule used by the terminal device before the non-3rd generation partnership project path switching, and access priority indication information, wherein
the access priority indication information indicates the second target transmission path.

13. The method according to claim 12, wherein the second target transmission path is a trusted non-3rd generation partnership project transmission path or an untrusted non-3rd generation partnership project transmission path.

14. The method according to claim 10 or 11, wherein the second offloading rule comprises:
a fourth offloading rule, wherein the fourth offloading rule indicates the terminal device to perform redundant transmission over the at least two non-3rd generation partnership project transmission paths.

15. The method according to claim 10 or 11, wherein the second offloading rule comprises:
an offloading rule used by the terminal device before the non-3rd generation partnership project path switching, a fourth offloading rule, and a rule application condition, wherein the fourth offloading rule indicates the terminal device to perform redundant transmission over the at least two non-3rd generation partnership project transmission paths, and the rule application condition indicates to apply the offloading rule when path switching is performed.

16. A communication method, wherein the method comprises:
determining, by a mobility management device, to perform non-3rd generation partnership project transmission path switching in a multi-access session, wherein the multi-access session comprises at least two non-3rd generation partnership project transmission paths;
sending, by the mobility management device, a second request message to a session management device, wherein the second request message comprises switching indication information, and the switching indication information indicates that non-3rd generation partnership project transmission path switching is to be performed and/or indicates that an established target transmission path is a non-3rd generation partnership project transmission path;
receiving, by the mobility management device, a second offloading rule sent by the session management device, wherein the second offloading rule is for supporting a terminal device in determining a second target transmission path from the at least two non-3rd generation partnership project transmission paths; and
sending, by the mobility management device, the second offloading rule to the terminal device.

17. The method according to claim 16, wherein the second request message further comprises a multi-access session identifier, and the multi-access session identifier is for determining the multi-access session of the terminal device.

18. The method according to claim 16 or 17, wherein the second request message further comprises a context identifier of the multi-access session, and the context identifier of the multi-access session is for determining the multi-access session of the terminal device.

19. The method according to any one of claims 16 to 18, wherein the second offloading rule comprises:
an offloading rule used by the terminal device before the non-3rd generation partnership project path switching, and access priority indication information, wherein
the access priority indication information indicates the second target transmission path.

20. The method according to claim 19, wherein the second target transmission path is a trusted non-3rd generation partnership project transmission path or an untrusted non-3rd generation partnership project transmission path.

21. The method according to any one of claims 16 to 18, wherein the second offloading rule comprises:
a fourth offloading rule, wherein the fourth offloading rule indicates the terminal device to perform redundant transmission over the at least two non-3rd generation partnership project transmission paths.

22. The method according to any one of claims 16 to 18, wherein the second offloading rule comprises:
an offloading rule used by the terminal device before the non-3rd generation partnership project path switching, a fourth offloading rule, and a rule application condition, wherein the fourth offloading rule indicates the terminal device to perform redundant transmission over the at least two non-3rd generation partnership project transmission paths, and the rule application condition indicates to apply the offloading rule when path switching is performed.

23. The method according to any one of claims 16 to 22, wherein the determining, by a mobility management device, to perform non-3rd generation partnership project transmission path switching in a multi-access session comprises:
determining, by the mobility management device based on a received non-access stratum message sent by the terminal device for requesting path switching, to perform non-3rd generation partnership project transmission path switching, wherein the non-access stratum message comprises the switching indication information, and the switching indication information indicates that the non-3rd generation partnership project transmission path switching is to be performed and/or indicates that the established target transmission path is the non-3rd generation partnership project transmission path.

24. The method according to any one of claims 16 to 23, wherein the method further comprises:
determining, by the mobility management device in a process of performing non-3rd generation partnership project path switching, that a first condition for releasing a signaling connection is met; and
releasing, by the mobility management device, a signaling connection of the terminal device on a target non-3rd generation partnership project transmission path or a source non-3rd generation partnership project transmission path.

25. The method according to claim 24, wherein the first condition for releasing a signaling connection comprises:
a first timer started by the mobility management device after the terminal device completes registration of the target non-3rd generation partnership project transmission path expires, wherein the first timer is configured to indicate to trigger release of a signaling connection of the source non-3rd generation partnership project transmission path; or
a second timer started by the mobility management device after the terminal device completes registration of the target non-3rd generation partnership project transmission path expires, and the terminal device does not complete switching of the target non-3rd generation partnership project transmission path, wherein the second timer is configured to indicate to trigger release of a signaling connection of the target non-3rd generation partnership project transmission path.

26. The method according to any one of claims 16 to 25, wherein the method further comprises:
sending, by the mobility management device, a third request message to the session management device after determining that the terminal device completes the non-3rd generation partnership project transmission path switching, wherein the third request message indicates to apply an offloading rule used by the terminal device and/or a user plane device before the non-3rd generation partnership project transmission path switching.

27. A communication apparatus, comprising a module configured to perform the method according to any one of claims 1 to 9, a module configured to perform the method according to any one of claims 10 to 15, or a module configured to perform the method according to any one of claims 16 to 26.

28. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement, by using a logic circuit or by executing code instructions, the method according to any one of claims 1 to 9, the method according to any one of claims 10 to 15, or the method according to any one of claims 16 to 26.

29. A computer-readable storage medium, wherein the storage medium stores a computer program or instructions, and when the computer program or the instructions are executed by a communication apparatus, the method according to any one of claims 1 to 9 is implemented, the method according to any one of claims 10 to 15 is implemented, or the method according to any one of claims 16 to 26 is implemented.

30. A computer program product, comprising computer-executable instructions, wherein when the instructions are run on a computer, the method according to any one of claims 1 to 9 is performed, the method according to any one of claims 10 to 15 is performed, or the method according to any one of claims 16 to 26 is performed.
